# EUROPEAN PATENT SPECIFICATION

(11) **EP 4 528 342 B1**
(45) Date of publication and mention of the grant of the patent: **24.06.2026**
(21) Application number: 24735136.4
(22) Date of filing: 16.05.2024
(51) Int. Cl.: G02B 5/09, H04N 23/55, H04N 23/57, G03B 17/17, G03B 30/00, H04M 1/02, G02B 5/04, G02B 7/18, G02B 13/00, H04M 1/21

(54) **REFLECTOR, CAMERA MODULE INCLUDING REFLECTOR, AND ELECTRONIC DEVICE INCLUDING CAMERA MODULE**
REFLEKTOR, KAMERAMODUL MIT REFLEKTOR UND ELEKTRONISCHE VORRICHTUNG MIT KAMERAMODUL
RÉFLECTEUR, MODULE DE CAMÉRA COMPRENANT UN RÉFLECTEUR, ET DISPOSITIF ÉLECTRONIQUE COMPRENANT UN MODULE DE CAMÉRA

(30) Priority: 04.08.2023 KR 20230102264; 10.11.2023 KR 20230155664
(43) Date of publication of application: 26.03.2025
(73) Proprietor: Samsung Electronics Co., Ltd., Suwon-si, Gyeonggi-do 16677 (KR)
(72) Inventor: AN, Hyosang, Suwon-si, Gyeonggi-do 16677 (KR); KWAK, Hokeun, Suwon-si, Gyeonggi-do 16677 (KR); LEE, Yongjae, Suwon-si, Gyeonggi-do 16677 (KR)
(74) Representative: HGF
(86) International application number: PCT/KR2024/006630
(87) International publication number: WO 2025/033653

(56) References cited:
- JP-A- 2002 048 904
- JP-A- 2006 208 428
- KR-A- 20210 027 170
- KR-A- 20210 033 914
- US-A1- 2022 091 373
- US-B1- 6 330 121

## Description

### BACKGROUND

### 1. Field

The disclosure generally relates to a reflector, for example, a reflector applicable to a camera module. The disclosure also relates to a camera module including the reflector. The disclosure also relates to an electronic device including the camera module.

### 2. Description of Related Art

Techniques for reducing phenomena, such as ghosting, flare, and/or glare, that may affect the quality of an image in camera modules are being developed. The above description is information the inventor(s) acquired during the course of conceiving the present disclosure, or already possessed at the time, and is not necessarily art publicly known before the present application was filed.

### Technical problem

For imaging cameras, the quality of the captured image is of utmost importance. Unnecessary internal light reflection in a prism of the camera can negatively affect the quality of an image by creating ghost images, flares, and light bleeding.

The camera prism can be made from materials such as glass or plastic. Glass prisms generally provide good quality images, but the glass itself is fragile so is prone to breaking. Angled edges, known as chamfer cuts, can be incorporated into the glass prism to reduce a likelihood of the prism breaking, but these cuts may also cause additional internal reflection in the prism. Relevant prior art can be found in US6330121 A.

Plastic prisms can be formed using injection molding. These prisms are less fragile than glass prisms so do not require chamfer cuts. However, injection-molded prisms unavoidably include a gate mark where the plastic is injected into the mold during the manufacture of the prism. The area around the gate mark often has uneven surfaces and other imperfections. The irregular nature of the gate area can cause light rays to scatter unevenly, resulting in unwanted internal reflections in the prism and consequent image flare. Moreover, it can be difficult to securely attach the prism to other components of the camera module due to the irregular gate area.

Moreover, it is desirable to reduce a size of a camera module in electronic devices. One way of achieving this is to place the prism very close to an optical sensor of the camera module. However, moving the prism closer to the optical sensor can also cause flare. To reduce flare, lateral sides of the injection molded prism should be etched, but this then requires larger draft angles. It is then more difficult to assemble the prism into the prism seating part of the camera module.

### SUMMARY

A reflector according to the invention is defined in claim 1.

A camera module may include the reflector according to claim 1.

An electronic device may include said camera module.

Providing a protrusion on the reflector (which may also be referred to as a prism) makes it easier to assemble the reflector into the camera module.

The protrusion enables a large draft angle to be applied to the prism. This enables the prism to have a greater amount of etching on a side surface of the prism, which reduces unwanted reflections, or flare, within the prism.

Overall, the protrusion on the reflector enables the camera module to produce better quality images with a reduced amount of unwanted visual effects, such as flare, whilst also enabling the camera module to be reduced in size. A more compact camera module which provides better quality images is produced.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram of an electronic device in a network environment according to an embodiment;
FIG. 2 is a block diagram illustrating a camera module according to an embodiment;
FIG. 3 is a perspective view of an electronic device in one direction according to an embodiment;
FIG. 4 is a perspective view of an electronic device in another direction according to an embodiment;
FIG. 5 is a view schematically illustrating a camera module according to an embodiment;
FIG. 6 is a perspective view of a reflector according to an embodiment;
FIG. 7 is a plan view of a reflector according to an embodiment;
FIG. 8 is a side view of a reflector according to an embodiment;
FIG. 9 is a front view of a reflector according to an embodiment;
FIG. 10 is a bottom view of a reflector according to an embodiment;
FIG. 11 is a view schematically illustrating an apparatus for manufacturing a reflector according to an embodiment;
FIG. 12 is a side view of a reflector according to an embodiment;
FIG. 13 is a perspective view of a reflector according to an embodiment;
FIG. 14 is a side view of a reflector according to an embodiment;
FIG. 15 is a perspective view of a reflector according to an embodiment;
FIG. 16 is a side view of a reflector according to an embodiment;
FIG. 17 is a perspective view of a reflector according to an embodiment;
FIG. 18 is a side view of a reflector according to an embodiment;
FIG. 19 is a perspective view of a reflector according to an embodiment;
FIG. 20A is a side view of a reflector according to an embodiment;
FIG. 20B is a side view illustrating a portion of a reflector according to an embodiment;
FIG. 21 is a perspective view of a reflector according to an embodiment;
FIG. 22 is a side view of a reflector according to an embodiment;
FIG. 23 is a perspective view of a reflector according to an embodiment;
FIG. 24 is a side view of a reflector according to an embodiment;
FIG. 25 is a perspective view of a reflector according to an embodiment;
FIG. 26 is a side view of a reflector according to an embodiment;
FIG. 27 is a perspective view of a reflector according to an embodiment;
FIG. 28 is a side view of a reflector according to an embodiment; and
FIG. 29 is a perspective view of a reflector according to an embodiment.

### DETAILED DESCRIPTION

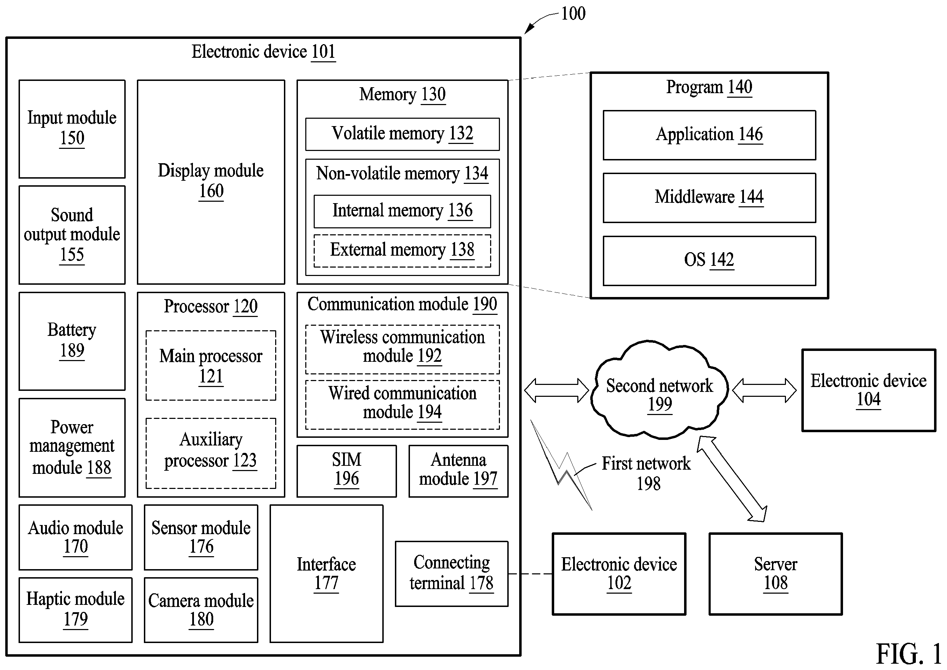

FIG. 1 is a block diagram of an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented as separate from, or as part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An artificial intelligence model may be generated through machine learning. Such learning may be performed, e.g., by the electronic device 101 where the artificial intelligence is performed, or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing a record. The receiver may be used to receive an incoming call. According to an embodiment, the receiver may be implemented separately from the speaker or as a portion of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to sense a touch, or a pressure sensor adapted to measure an intensity of a force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a portion of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth-generation (5G) network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may be transmitted or received between the communication module 190 and the external electronic device via the selected at least one antenna. According to an embodiment, another component (e.g., a radio frequency integrated circuit (RFIC)) other than the radiating element may be additionally formed as a portion of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more of external electronic devices (e.g., the external electronic devices 102 and 104, or the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to the embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1^{st}," and "2^{nd}," or "first" and "second" may be used to simply distinguish a corresponding component from another, and do not limit the components in other aspect (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., wiredly), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

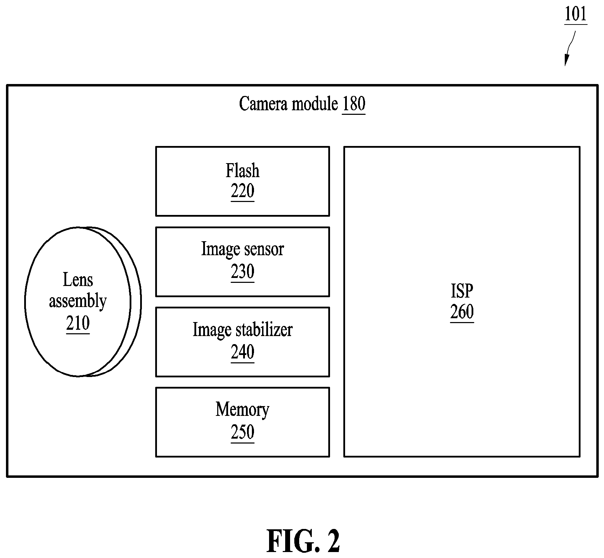

FIG. 2 is a block diagram illustrating a camera module according to an embodiment.

Referring to FIG. 2, the camera module 180 may include a lens assembly 210, a flash 220, an image sensor 230, an image stabilizer 240, a memory 250 (e.g., a buffer memory), or an ISP 260. The lens assembly 210 may be configured to collect light emitted from a target object of which an image is intended to be captured. The lens assembly 210 may include one or more lenses. According to an embodiment, the camera module 180 may include a plurality of lens assemblies 210. In this case, the camera module 180 may constitute, for example, a dual camera, a 360-degree camera, or a spherical camera. A portion of the lens assemblies 210 may have the same lens properties (e.g., an angle of view, a focal length, an auto focus, an f number, or an optical zoom), or at least one lens assembly may have one or more lens properties that are different from those of another lens assembly. The lens assembly 210 may include, for example, a wide-angle lens or a telephoto lens.

The flash 220 may emit light to be used to enhance light emitted or reflected from the object. According to an embodiment, the flash 220 may include one or more light emitting diodes (LEDs) (e.g., a red-green-blue (RGB) LED, a white LED, an infrared (IR) LED, or an ultraviolet (UV) LED), or a xenon lamp. The image sensor 230 may obtain an image corresponding to the object by converting light emitted or reflected from the object and transmitted through the lens assembly 210 into an electrical signal. According to an embodiment, the image sensor 230 may include, for example, one image sensor selected from among image sensors having different properties, such as, for example, an RGB sensor, a black and white (BW) sensor, an IR sensor, or a UV sensor, a plurality of image sensors having the same property, or a plurality of image sensors having different properties. Each image sensor included in the image sensor 230 may be implemented using, for example, a charged coupled device (CCD) sensor or a complementary metal-oxide-semiconductor (CMOS) sensor.

The image stabilizer 240 may move at least one lens included in the lens assembly 210 or the image sensor 230 in a specific direction, or control an operation characteristic (e.g., adjust the read-out timing) of the image sensor 230, in response to a movement of the camera module 180 or the electronic device 101 including the camera module 180. This may compensate for at least a portion of a negative effect of the movement on an image to be captured. For example, the image stabilizer may compensate for at least a portion of a blurring effect which may be caused by a movement of a user's arms when capturing an image of the object. According to an embodiment, the image stabilizer 240 may sense such a movement of the camera module 180 or the electronic device 101 using a gyro sensor (not shown) or an acceleration sensor (not shown) disposed inside or outside the camera module 180. According to an embodiment, the image stabilizer 240 may be implemented as, for example, an optical image stabilizer. The memory 250 may at least temporarily store at least a portion of the image obtained through the image sensor 230 for a subsequent image processing task. For example, when image acquisition is delayed by a shutter or a plurality of images is obtained at a high speed, an obtained original image (e.g., a Bayer-patterned image or a high-resolution image) may be stored in the memory 250, and a copy image (e.g., a low-resolution image) corresponding the original image may be previewed through the display module 160. Subsequently, when a specified condition (e.g., a user input or a system command) is satisfied, at least a portion of the original image stored in the memory 250 may be obtained and processed by, for example, the ISP 260. According to an embodiment, the memory 250 may be configured as at least part of the memory 130 or as a separate memory operated independently of the memory 130.

The ISP 260 may perform one or more image processing operations on the image obtained through the image sensor 230 or the image stored in the memory 250. The image processing operations may include, for example, depth map generation, three-dimensional (3D) modeling, panorama generation, feature point extraction, image synthesis, or image compensation (e.g., noise reduction, resolution adjustment, brightness adjustment, blurring, sharpening, or softening. Additionally or alternatively, the ISP 260 may control at least one of the components (e.g., the image sensor 230) included in the camera module 180 (e.g., control an exposure time, control a read-out timing, or the like). The image processed by the ISP 260 may be stored again in the memory 250 for further processing or may be provided to an external component (e.g., the memory 130, the display module 160, the electronic device 102, the electronic device 104, or the server 108) of the camera module 180. According to an embodiment, the ISP 260 may be configured as at least part of the processor 120 or as a separate processor operated independently of the processor 120. When the ISP 260 is configured as a processor separate from the processor 120, at least one image processed by the ISP 260 may be displayed as it is or be displayed through the display module 160 after additional image processing is performed by the processor 120.

According to an embodiment, the electronic device 101 may include a plurality of camera modules 180 having different properties or functions. In this case, for example, at least one of the plurality of camera modules 180 may be a wide-angle camera, and at least another one of the plurality of camera modules 180 may be a telephoto camera. Similarly, at least one of the plurality of camera modules 180 may be a front camera, and at least another one of the plurality of camera modules 180 may be a rear camera.

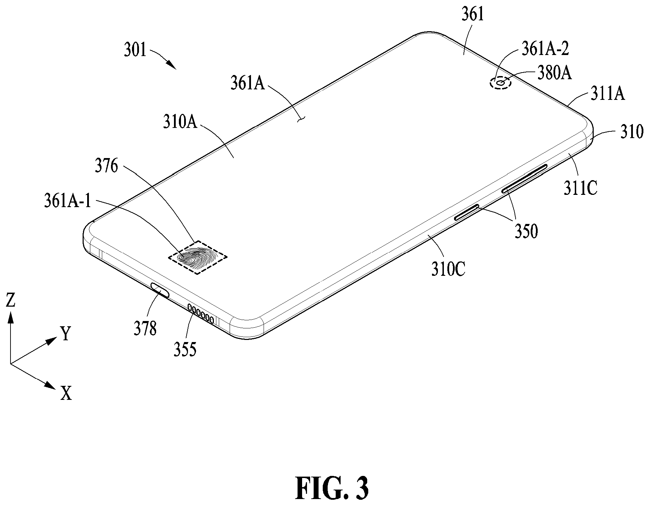

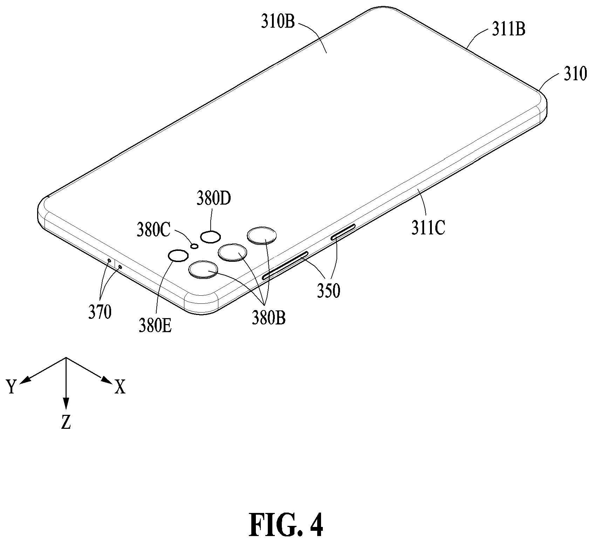

FIG. 3 is a perspective view of an electronic device in a first direction according to an embodiment. FIG. 4 is a perspective view of the electronic device in a second direction, different to the first direction, according to an embodiment.

Referring to FIGS. 3 and 4, an electronic device 301 (e.g., the electronic device 101 of FIG. 1) may include a housing 310 including a first surface 310A (e.g., a front surface), a second surface 310B (e.g., a rear surface), and a third surface 310C (e.g., a side surface) enclosing a space between the first surface 310A and the second surface 310B. The first surface 310A may be formed by a first plate 311A of which at least a portion is substantially transparent. For example, the first plate 311A may include a polymer plate or a glass plate including at least one coating layer. The second surface 310B may be formed by a second plate 311B that is substantially opaque. For example, the second plate 311B may be formed of coated or tinted glass, ceramic, polymer, metal (e.g., aluminum, stainless steel (STS), or magnesium), or a combination thereof. The third surface 310C may be formed by a frame 311C that is coupled to the first plate 311A and the second plate 311B and includes a metal and/or a polymer. The second plate 311B and the frame 311C may be formed monolithically. The second plate 311B and the frame 311C may be formed of substantially the same material (e.g., aluminum).

The electronic device 301 may include an input module 350 (e.g., the input module 150 of FIG. 1). The input module 350 may be positioned on the third surface 310C. The input module 350 may include at least one key input device. For example, the key input device may include one or more mechanical actuators (e.g., buttons), one or more capacitors, and/or one or more inductors.

The electronic device 301 may include a sound output module 355 (e.g., the sound output module 155 of FIG. 1). The sound output module 355 may be positioned on the third surface 310C. The sound output module 355 may include one or more holes.

The electronic device 301 may include a display module 361 (e.g., the display module 160 of FIG. 1). The display module 361 may be positioned on the first surface 310A. The display module 361 may be visible through at least a portion of the first plate 311A. The display module 361 may have a shape that is substantially the same as the shape of an outer edge of the first plate 311A. The periphery of the display module 361 may substantially coincide with the outer edge of the first plate 311A. The display module 361 may include a touch sensing circuit, a pressure sensor for measuring an intensity (pressure) of a touch, and/or a digitizer for detecting a magnetic-type stylus pen. The display module 361 may include a screen display area 361A that is visually exposed to display content using pixels. The screen display area 361A may include a sensing area 361A-1. The sensing area 361A-1 may overlap at least one area of the screen display area 361A. The sensing area 361A-1 may allow transmission of an input signal related to a sensor module 376 (e.g., the sensor module 176 of FIG. 1). The sensing area 361A-1 may display content, like the screen display area 361A that does not overlap the sensing area 361A-1. For example, the sensing area 361A-1 may display the content while the sensor module 376 is not operating. At least a portion of a camera area 361A-2 may overlap the screen display area 361A. The screen display area 361A may include the camera area 361A-2. The camera area 361A-2 may allow transmission of an optical signal related to a first camera module 380A (e.g., the camera module 180 of FIG. 1 and/or the camera module 180 of FIG. 2). At least a portion of the camera area 361A-2, that overlaps the screen display area 361A, may display content, similarly to the screen display area 361A that does not overlap the camera area 361A-2. For example, the camera area 361A-2 may display the content while the first camera module 380A is not operating.

The electronic device 301 may include an audio module 370 (e.g., the audio module 170 of FIG. 1). The audio module 370 may be positioned on the third surface 310C. The audio module 370 may obtain a sound through at least one hole.

The electronic device 301 may include the sensor module 376. The sensor module 376 may be positioned on the first surface 310A. The sensor module 376 may form the sensing area 361A-1 in at least a portion of the screen display area 361A. The sensor module 376 may receive an input signal transmitted through the sensing area 361A-1 and generate an electrical signal based on the received input signal. For example, the input signal may have a designated physical quantity (e.g., heat, light, temperature, sound, pressure, or ultrasound). The input signal may include a signal related to biometric information (e.g., a fingerprint) of a user.

The electronic device 301 may include a connecting terminal 378 (e.g., the connecting terminal 178 of FIG. 1). The connecting terminal 378 may be positioned on the third surface 310C. For example, when the electronic device 301 is viewed in one direction (e.g., the +Y direction), the connecting terminal 378 may be positioned substantially in a central portion of the third surface 310C, and the sound output module 355 may be positioned on one side (e.g., the right side) with respect to the connecting terminal 378.

The electronic device 301 may include the first camera module 380A (e.g., the camera module 180 of FIG. 1 and/or the camera module 180 of FIG. 2). The first camera module 380A may be positioned on the first surface 310A. At least a portion of the first camera module 380A may be positioned under the display module 361. The first camera module 380A may receive an optical signal transmitted through the camera area 361A-2.

The electronic device 301 may include a plurality of second camera modules 380B (e.g., the camera module 180 of FIG. 1 and/or the camera module 180 of FIG. 2). The plurality of second camera modules 380B may be positioned on the second surface 310B. The plurality of second camera modules 380B may be arranged in a first row in one direction (e.g., the Y direction) of the second plate 311B. The plurality of second camera modules 380B may have different fields of view. For example, the plurality of second camera modules 380B may include an ultra wide-angle camera, a wide-angle camera, and/or a tele camera.

The electronic device 301 may include a light module 380C (e.g., the flash 220 of FIG. 2). The light module 380C may be arranged in a second row substantially parallel to the first row of the plurality of second camera modules 380B on the second surface 310B. The light module 380C may include one or more light-emitting diodes or xenon lamps. The light module 380C may include a sensor configured to detect external light. For example, the sensor may include a flicker sensor.

The electronic device 301 may include a third camera module 380D. The pixel, magnification, and/or field of view of the third camera module 380D may differ from the pixel, magnification, and/or field of view of at least one second camera module 380B. The third camera module 380D may be arranged in the second row substantially parallel to the first row of the plurality of second camera modules 380B on the second surface 310B.

The electronic device 301 may include a fourth camera module 380E. The fourth camera module 380E, which may also be referred to as a "depth camera" or a "time-of-flight (ToF) camera", may be configured to measure the distance between the fourth camera module 380E and an object. For example, the fourth camera module 380E may be configured to measure the distance using at least one or a combination of an ultrasonic wave, an infrared ray, or a laser. The fourth camera module 380E may be arranged in the second row substantially parallel to the first row of the plurality of second camera modules 380B on the second surface 310B.

Meanwhile, the embodiments set forth herein may also apply to electronic devices of various shapes/forms (e.g., a foldable electronic device, a slidable electronic device, a rollable electronic device, a digital camera, a digital video camera, a tablet PC, a laptop computer, and other electronic devices), in addition to the electronic device shown in FIGS. 3 and 4.

As used herein, the terms "substantially", "approximately", "generally", and "about" in reference to a given parameter, property, or condition may include a degree that one of ordinary skill in the art would understand that the given parameter, property, or condition is met with a small degree of variance, such as within acceptable manufacturing tolerances. For example, a parameter that is substantially met may be at least about 90% met, at least about 95% met, or at least about 99% met.

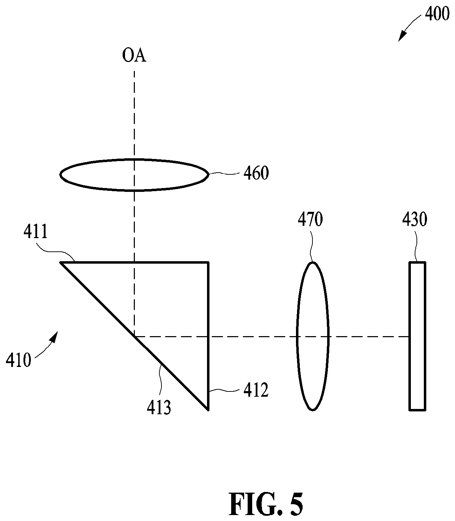

FIG. 5 is a view schematically illustrating a camera module according to an embodiment.

Referring to FIG. 5, a camera module 400 (e.g., the camera module 180 of FIG. 1, the camera module 180 of FIG. 2, and/or the first camera module 380A, the second camera module 380B, and/or the third camera module 380D of FIGS. 3 and 4) may include a reflector 410 configured to reflect light (e.g., light from an object) received from outside the camera module 400. The reflector 410 may include an incidence surface 411 configured to allow light to enter the reflector, an exit surface 412 configured to allow light to exit the reflector, and a reflective surface 413 configured to reflect light entering the reflector through the incidence surface 411 toward the exit surface 412. The incidence surface 411 and the exit surface 412 may form or be provided at an angle of substantially 90 degrees, but are not limited thereto, and may form 0 degrees, 180 degrees, or other predetermined angles. The reflective surface 413 may be inclined at a non-zero angle with respect to each of the incidence surface 411 and the exit surface 412. An optical axis OA may be defined as an imaginary line connecting the incidence surface 411, the exit surface 412, and the reflective surface 413.

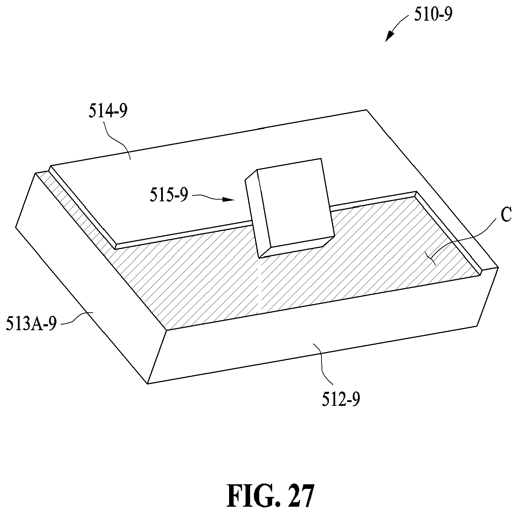

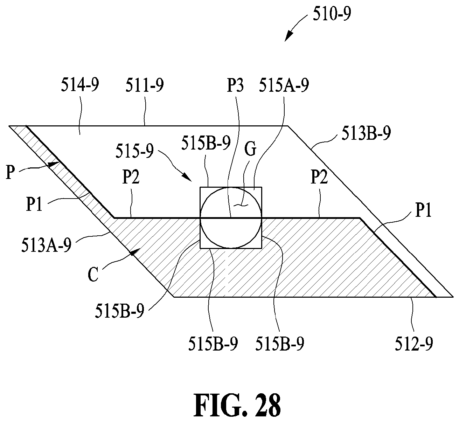

In an embodiment not shown, the reflector 410 may include an additional reflective surface. In this embodiment, the incidence surface 411 and the exit surface 412 may be substantially parallel to each other. For example, the reflector 410 may include a reflector in a substantially rhomboidal shape described below with reference to FIGS. 27 and 28.

In an embodiment not shown, alternatively or additionally, the reflector 410 may include various optical systems. For example, the reflector 410 may include a mirror having a reflective surface 413. At least one of the incidence surface 411 and the exit surface 412 may be omitted.

The camera module 400 may include an image sensor 430 (e.g., the image sensor 230 of FIG. 2). The image sensor 430 may be configured to receive light coming from the reflector 410. The image sensor 430 may be configured to receive light which has exited the reflector, optionally exiting via the exit surface, after the light has been reflected by the reflective surface of the reflector. The image sensor 430 may be configured to convert the received light into an electrical signal. The converted electrical signal may be transmitted to a processor (e.g., the processor 120 of FIG. 1) and/or an ISP (e.g., the ISP 260 of FIG. 2) through any suitable connecting means (e.g., a flexible printed circuit board (FPCB) (not shown)).

The camera module 400 may include a first lens assembly 460 (e.g., the lens assembly 210 of FIG. 2). The first lens assembly 460 may include at least one first lens. A portion of the optical axis OA may be defined as an imaginary line connecting the center of curvature of one surface of the at least one first lens and the center of curvature of the opposite surface of the at least one first lens. The first lens assembly 460 may be placed on or by the side of the incidence surface 411 of the reflector 410. Light outside the camera module 400 may pass through the at least one first lens and then enter the reflector through the incidence surface 411. In an embodiment not shown, the reflector 410 may reflect light from the outside of the camera module 400 without passing through the first lens assembly 460.

The camera module 400 may include a second lens assembly 470 (e.g., the lens assembly 210 of FIG. 2). The second lens assembly 470 may include at least one second lens. A portion of the optical axis OA may be defined as an imaginary line connecting the center of curvature of one surface of the at least one second lens and the center of curvature of the opposite surface of the at least one second lens. The second lens assembly 470 may be placed on or by the side of the exit surface 412 of the reflector 410. Light reflected by the reflector 410 may pass through the at least one second lens and then be received by the image sensor 430. In an embodiment not shown, the light reflected by the reflector 410 may be received by the image sensor 430 without passing through the second lens assembly 470.

In an embodiment not shown, the camera module 400 may include an image stabilizer (e.g., the image stabilizer 240 of FIG. 2). The image stabilizer may include a carrier (not shown) configured to carry or support the reflector 410. The carrier may include a seating structure in which the reflector 410 may be seated. In an embodiment, the image stabilizer may be configured to rotate or tilt the reflector 410 about at least one axis (e.g., the yaw axis and/or the pitch axis). In an embodiment, the rotation or tilt of the reflector 410 may be fixed, and the image stabilizer may be configured to drive the first lens assembly 460, the second lens assembly 470, and/or the image sensor 430.

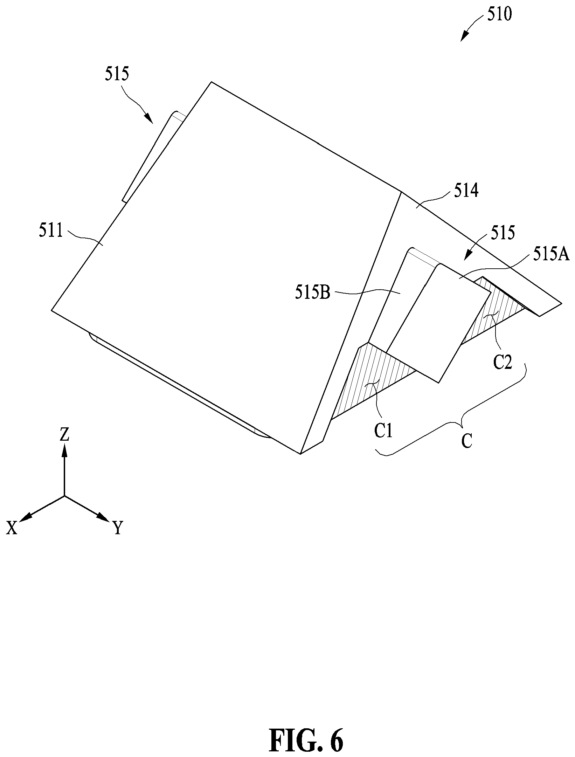

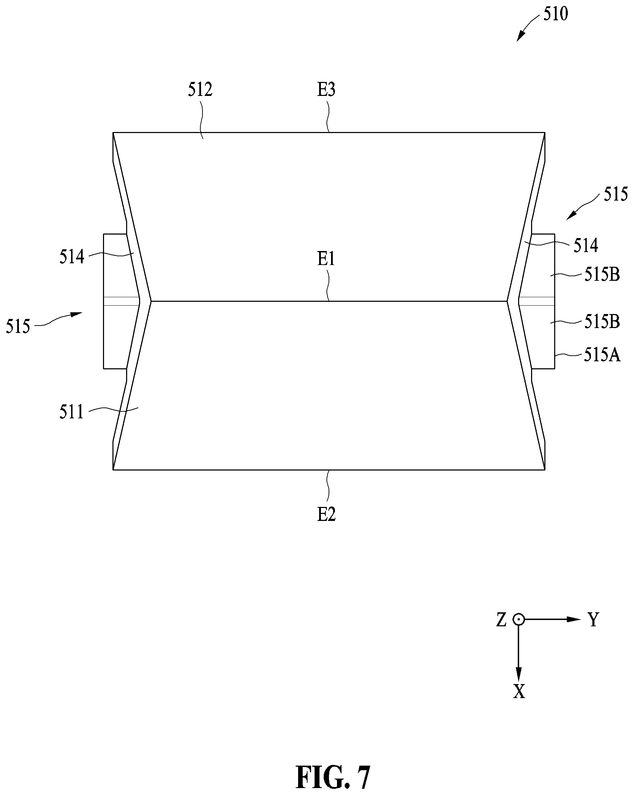

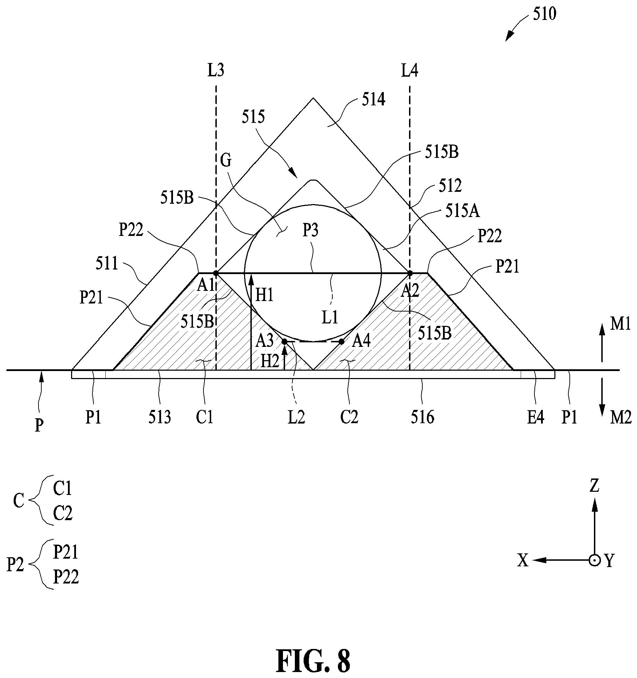

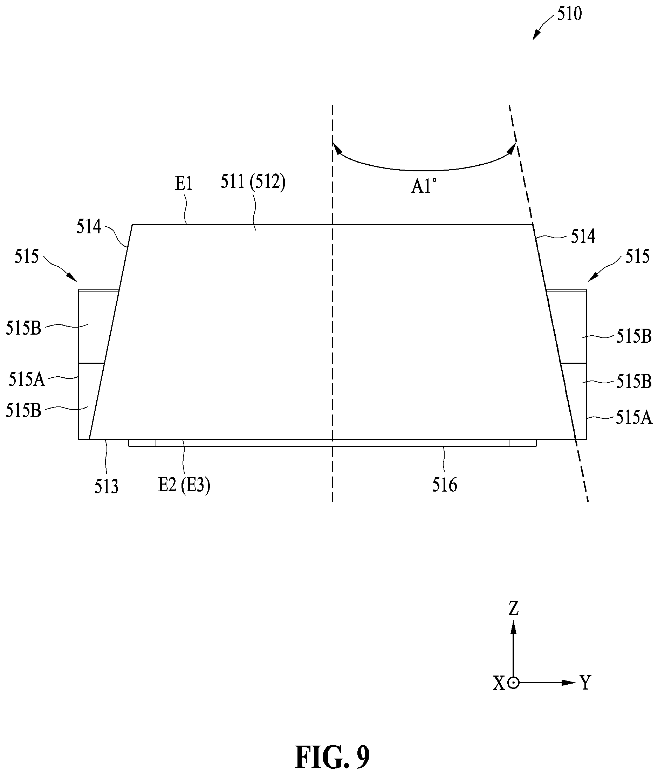

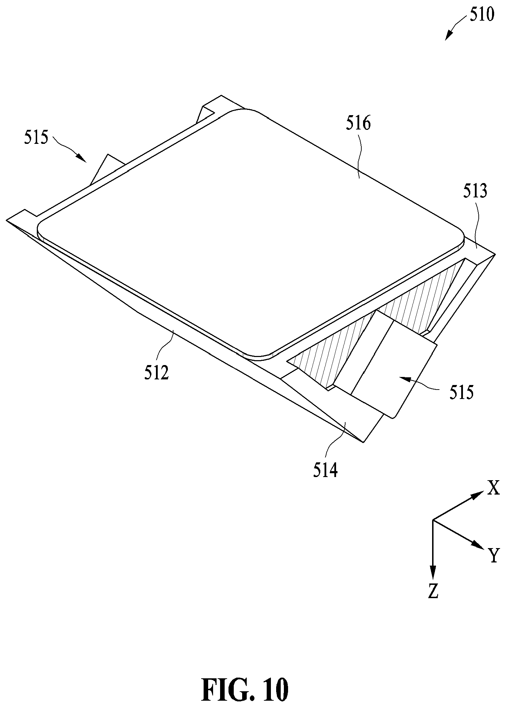

FIG. 6 is a perspective view of a reflector according to an embodiment. FIG. 7 is a plan view of the reflector according to an embodiment. FIG. 8 is a side view of the reflector according to an embodiment. FIG. 9 is a front view of the reflector according to an embodiment. FIG. 10 is a bottom view of the reflector according to an embodiment.

Referring to FIGS. 6 to 10, a reflector 510 (e.g., the reflector 410 of FIG. 5) may include an incidence surface 511 (e.g., the incidence surface 411 of FIG. 5), an exit surface 512 (e.g., the exit surface 412 of FIG. 5), and a reflective surface 513 (e.g., the reflective surface 413 of FIG. 5). The incidence surface 511 and the exit surface 512 may form a first angle. That is, there may be a first angle provided between the incidence surface and the exit surface. For example, the first angle may be about 90 degrees, but is not limited thereto, and may include other angles (e.g., about 75 degrees). The incidence surface 511 and the reflective surface 513 may form a second angle that is less than the first angle. That is, there may be a second angle provided between the incidence surface and the reflective surface, where the second angle is smaller than the first angle. For example, the second angle may be about 45 degrees, but is not limited thereto, and may include other angles. The exit surface 512 and the reflective surface 513 may form a third angle that is less than the first angle. That is, there may be a third angle provided between the reflective surface and the exit surface. The third angle may be smaller than the first angle. The third angle may be smaller than, equal to, or larger than, the second angle. For example, the third angle may be about 45 degrees, but is not limited thereto, and may include other angles. The second and third angles may be substantially the same. In an embodiment not shown, the second and third angles may be different.

The length of an edge E1 formed by the incidence surface 511 and the exit surface 512 may be less than the length of an edge E2 formed by the incidence surface 511 and the reflective surface 513. For example, the length of the edge E1 may be about 3.252 mm, and the length of the edge E2 may be about 3.354 mm, 3.422 mm, 3.894 mm, or 3.994 mm. The width (e.g., the Y-directional dimension) of the incidence surface 511 may be tapered from the edge E2 toward the edge E1.

The length of the edge E1 formed by the incidence surface 511 and the exit surface 512 may be less than the length of an edge E3 formed by the exit surface 512 and the reflective surface 513. For example, the length of the edge E1 may be about 3.252 mm, and the length of the edge E3 may be about 3.354 mm, 3.422 mm, 3.894 mm, or 3.994 mm. The width (e.g., the Y-directional dimension) of the exit surface 512 may be tapered from the edge E3 toward the edge E1.

The reflector 510 may include a plurality of side surfaces 514. For example, the reflector 510 may include a pair of side surfaces 514 positioned opposite each other. Each side surface 514 may be connected to the incidence surface 511, the exit surface 512, and the reflective surface 513.

The plurality of side surfaces 514 may each be inclined with respect to the reflective surface 513. An angle A1 formed by the normal direction (e.g., the Z-axis direction) of the reflective surface 513 and the tangential direction of at least one side surface 514 may vary depending on the strength of a corrosion area C applied to the at least one side surface 514. For example, the angle A1 may be about 2.5 degrees or greater, about 3 degrees or greater, or about 10 degrees or greater. The lower limit of the angle A1 may affect the level of corrosion applicable to the at least one side surface 514. For example, the stronger the level of corrosion that is applied to the at least one side surface 514, the higher the draft angle may be required, and the greater the lower limit of the angle A1.

The plurality of side surfaces 514 may each include a corrosion area C. The corrosion area C may reduce or prevent the formation of an unintended optical path from the outside of the reflector 510 to the inside of the reflector 510 or from the inside of the reflector 510 to the outside of the reflector 510. The corrosion area C may be formed at any location suitable for reducing or suppressing phenomena (e.g., ghosting, flare, and/or glare) that may occur in a captured image due to unnecessary light reflection in the at least one side surface 514. For example, the corrosion area C may be placed in an area, close to the reflective surface 513, of the at least one side surface 514. The corrosion area C may be positioned in an area recessed with respect to the other area of the at least one side surface 514. However, the corrosion area C is not limited to the shown embodiment, and may be applied to all areas of the at least one side surface 514 and/or a second surface 515B of a protrusion 515 excluding a first surface 515A of the protrusion 515 where a gate area G is positioned.

The reflector 510 may include a plurality of protrusions 515. The respective protrusions 515 may protrude from the respective side surfaces 514 in the side direction (e.g., in the +/-Y direction) of the reflector 510. At least a portion of the one or more protrusions 515 may be a portion supported (e.g., seated) in an environment to which the reflector 510 is applied (e.g., the camera module 180 of FIG. 1, the camera module 180 of FIG. 2, the first camera module 380A, the second camera module 380B, and/or the third camera module 380D of FIGS. 3 and 4, and/or the camera module 400 of FIG. 5).

A protrusion 515 may be implemented as a solid with a substantially rhomboidal cross section. The protrusion 515 may include a first surface 515A, and a plurality of (e.g., four) second surfaces 515B connecting the first surface 515A and a side surface 514. The first surface 515A may be oriented to be substantially orthogonal to the reflective surface 513, but is not necessarily limited thereto, and may be oriented in a different direction. In an example not shown, the first surface 515A may be substantially parallel to a side surface 514. The plurality of second surfaces 515B may be oriented at a non-zero angle with respect to the reflective surface 513, but is not necessarily limited thereto, and may be oriented in various directions. For example, among the four second surfaces 515B, at least two second surfaces 515B may be substantially parallel to the reflective surface 513, and the other two second surfaces 515B may be substantially orthogonal to the reflective surface 513.

The protrusion 515 may divide the corrosion area C into several areas. For example, a corner area formed by two adjacent second surfaces 515B of the protrusion 515 may be connected to the reflective surface 513, and the corrosion area C may include a first corrosion area C1 and a second corrosion area C2 divided by the protrusion 515. The first corrosion area C1 may be closer to the incidence surface 511 than the exit surface 512, and the second corrosion area C2 may be closer to the exit surface 512 than the incidence surface 511.

The corrosion area C may be applied at least partially to at least one second surface 515B among the plurality of second surfaces 515B of the protrusion 515. The corrosion area C may not be applied to the first surface 515A of the protrusion 515.

In an embodiment not shown, the reflector 510 may include a paint placed on any surface (e.g., at least a portion of the second surface 515B adjacent to the side surface 514) of the protrusion 515. The paint may include a substantially black color. In an embodiment not shown, the protrusion 515 may be positioned on the side surface 514 in a double injection form of substantially black color.

The first surface 515A of the protrusion 515 may include a gate area G (see FIG. 8). The gate area G may be an area that allows a molding material (e.g., plastic) to be injected into and/or discharged from one or more molds in the manufacture of the reflector 510. The gate area G may have a shape having a substantially circular or oval cross section. The gate area G may be a visible portion having a thickness or height on the first surface 515A. For example, the gate area G may be a portion having a thickness or height of about 0.05 mm from the first surface 515A.

The gate area G may include a pin gate. However, embodiments are not limited thereto, and the gate area G may include a direct gate, a side gate, an overlap gate, a submarine gate, or any other gate suitable for manufacturing the reflector 510.

The reflector 510 may include a parting line P. The parting line P may be defined as a boundary line formed by a plurality of molds in the manufacture of the reflector 510. For example, the reflector 510 may be manufactured by a first mold M1 (e.g., an upper mold) and a second mold M2 (e.g., a lower mold) divided based on the parting line P shown. As shown in FIG. 8, the parting line P may appear as a line when the side surface 514 of the reflector 510 is viewed.

When the protrusion 515 is viewed in FIG. 8, the parting line P may pass through a first virtual line L1, where the first virtual line L1 may be defined as the longest line of the virtual lines connecting any two points A1 and A2 or A3 and A4 on the outline of the protrusion 515. The length of the first virtual line L1 may be substantially equal to or greater than the length of any other line (e.g., a second virtual line L2) connecting any other two points A3 and A4 on the outline of the protrusion 515. In other words, if any two points A1 and A2 can be designated on the outline of the first surface 515A of the protrusion 515 and if virtual lines L3 and L4 do not meet the outline of the first surface 515A excluding the edges of the outline of the first surface 515A on which the two points A1 and A2 are positioned, respectively, when the virtual lines L3 and L4 are drawn from the respective points A1 and A2 in a direction in which the mold M2 is separated (e.g., the direction toward the reflective surface 513 or the -Z direction), then the two points A1 and A2 may be determined to be points that the parting line P passes through. This may prevent undercuts in the protrusion 515 when removing the molds M1 and M2.

The parting line P may include a first parting line P1 extending along the edge E4 of the reflective surface 513 abutting at least one side surface 514, a second parting line P2 extending along the at least one side surface 514, and a third parting line P3 passing through the protrusion 515. A portion P21 of the second parting line P2 may extend substantially parallel to the incidence surface 511 and the exit surface 512, and another part P22 of the second parting line P2 may extend substantially parallel to the reflective surface 513. A portion of the second parting line P2 may extend in a direction toward the gate area G. The third parting line P3 may pass through the edge areas and/or corner areas of the protrusion 515. For example, the third parting line P3 may pass through the edges (or an area close to the edge) between two adjacent second surfaces 515B and the corners (or an area close to the corner) formed by two adjacent edges of the first surface 515A. The third parting line P3 may pass through the center of the gate area G. According to the parting line P shown, undercuts may not occur substantially on any surface (e.g., the second surface 515B) of the protrusion 515.

The corrosion area C may be applied to any one area (e.g., the -Z directional area adjacent to the reflective surface 513) of the at least one side surface 514 based on the parting line P. In an embodiment not shown, the corrosion area C may be applied to all areas of the at least one side surface 514, irrespective of the parting line P.

In the manufacture of the reflector 510, the parting line P may be determined first, and the protrusion 515 may be fitted to the parting line P. In the manufacture of the reflector 510, the shape of the protrusion 515 may be determined first, and the parting line P may be fitted to the protrusion 515.

On the first surface 515A of the protrusion 515 and between the parting line P and the reflective surface 513, a first dimension (e.g., the length of L1 or a first width) in a direction (e.g., the X direction) according to the reflective surface 513 at a first position that is at a first distance H1 from the reflective surface 513 may be substantially equal to or greater than a second dimension (e.g., the length of L2 or a second width) in a direction (e.g., the X direction) according to the reflective surface 513 at a second position that is at a second distance H2, less than the first distance H1, from the reflective surface 513. For example, assuming second points A3 and A4 on the first surface 515A that a second line (e.g., a second virtual line L2), which is parallel to a first line (e.g., a line when the third parting line P3 is viewed in the side view of FIG. 8 or the first virtual line L1) connecting any two first points A1 and A2 meeting the parting line P on the first surface 515A where the gate area G is placed, meets, a first dimension of the first line may be substantially equal to or greater than a second dimension of the second line. This may cause a draft angle of the protrusion 515 in opposite directions (e.g., the +Z direction and the -Z direction) when the first mold M1 and the second mold M2 are removed, thereby reducing the possibility of undercuts on any surface (e.g., the second surface 515B) of the protrusion 515.

The area of the first surface 515A on which the gate area G is placed (the "first area") may be substantially equal to or greater than about 25% of the sum of the area of any one side surface 514 excluding the first surface 515 and the area of the first surface 515A (the "second area"). This may maintain the fluidity and surface precision of the injection. If the first area is less than about 25% of the second area, the fluidity of the injection may be impaired, and the surface precision may be reduced.

The height of the protrusion 515 may be substantially equal to or greater than about 0.3 mm. The height of the protrusion 515 may be defined as the maximum distance between the first surface 515A and the side surface 514. If the height of the protrusion 515 is less than about 0.3 mm, the fluidity of the injection may be impaired, and the surface precision may be reduced.

The reflector 510 may include a reflection valid surface 516. The reflection valid surface 516 may provide improved quality of reflection of the reflector 510. The reflection valid surface 516 may be placed on the reflective surface 513. The reflection valid surface 516 may form a step with the reflective surface 513. For example, at least one edge (e.g., the +/-Y directional edge) of the reflection valid surface 516 may be offset from an edge (e.g., the +/-Y directional edge) between the reflective surface 513 and the side surface 514. The reflection valid surface 516 may not match the parting line P. This may reduce the possibility of burrs on the edge of the reflector 510, reduce the possibility of undesired steps in the reflector 510, and facilitate the design of surface roughness. The area of the reflection valid surface 516 may be less than the area of the reflective surface 513.

The reflector 510 may have a refractive index substantially equal to or less than about 1.6. The reflector 510 may have an Abbe's Number that is substantially equal to or greater than about 40.

In an embodiment not shown, at least a partial area of the reflector 510 may include an invalid area to which an optical mask is applied. For example, the optical mask may be placed on the first surface 515A of the protrusion 515.

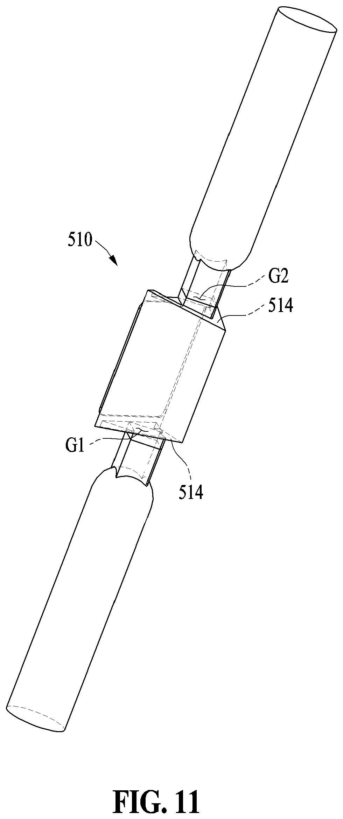

FIG. 11 is a view schematically illustrating an apparatus for manufacturing a reflector according to an embodiment.

Referring to FIG. 11, the reflector 510 may be manufactured by an overflow-type one-point gate method in view of the surface precision and weld lines. For example, a molding material (e.g., plastic) may be injected into any one side surface 514 of the reflector 510 through an injection gate G1, and the injected molding material may be discharged from the other side surface 514 of the reflector 510 through a discharge gate G2 positioned opposite the injection gate G1. This may reduce the deformation of the reflector 510 in the manufacture of the reflector 510 and prevent welded lines due to the molding material forming the reflector 510. However, the method of manufacturing the reflector 510 is not limited to the shown embodiment, and a one-point gate method or a two-point gate method may also be applied if it achieves the intended surface precision and reduces the possibility of welded lines.

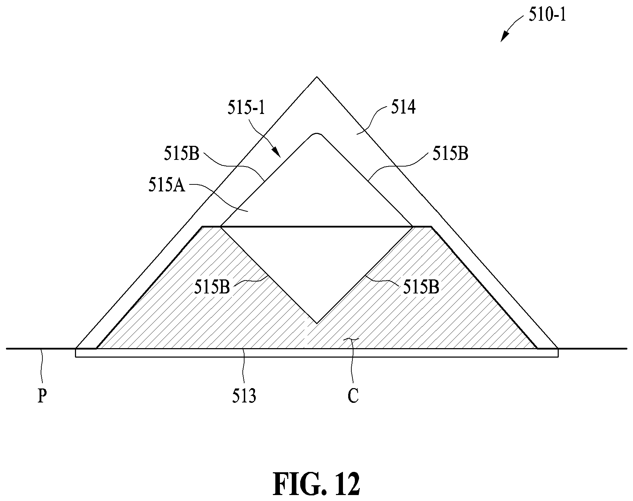

FIG. 12 is a side view of a reflector according to an embodiment.

Referring to FIG. 12, a reflector 510-1 (e.g., the reflector 410 of FIG. 5 and/or the reflector 510 of FIGS. 6 to 11) may include a protrusion 515-1 (e.g., the protrusion 515 of FIGS. 6 to 10) spaced apart from a reflective surface 513. Depending on the spacing between the protrusion 515-1 and the reflective surface 513, the area of a corrosion area C applicable to at least one side surface 514 may vary. As the spacing between the protrusion 515-1 and the reflective surface 513 increases, the area of the corrosion area C adjacent to the reflective surface 513 may increase, and the gap between a parting line P and the reflective surface 513 passing through the center of the protrusion 515-1 (e.g., the center of the gate area G of FIGS. 6 to 10) may increase. Meanwhile, the corrosion area C is not limited to the shown embodiment, and may be applied to all areas of the at least one side surface 514 and/or a second surface 515B of the protrusion 515-1 excluding a first surface 515A of the protrusion 515-1.

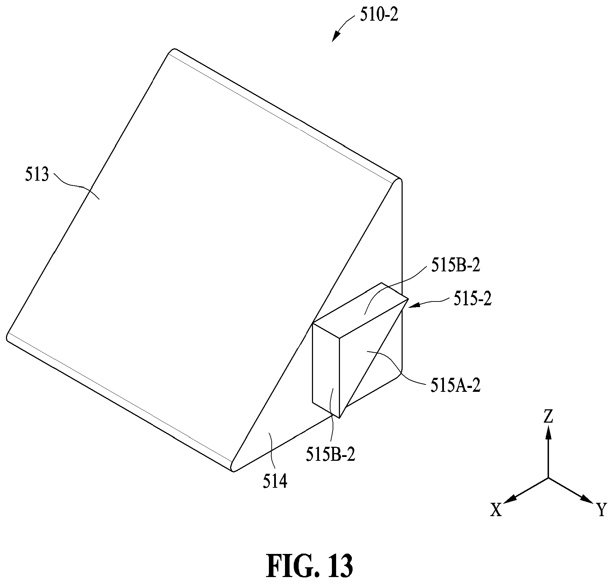

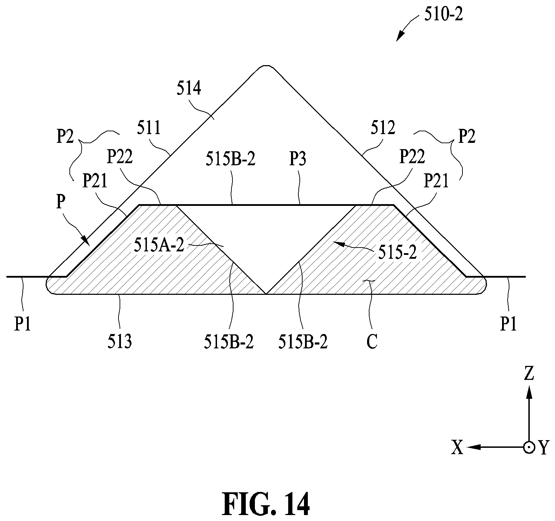

FIG. 13 is a perspective view of a reflector according to an embodiment. FIG. 14 is a side view of the reflector according to an embodiment. The coordinate systems shown in FIGS. 13 and 14 may be represented to conform to the coordinate systems shown in FIGS. 6 to 11.

Referring to FIGS. 13 and 14, a reflector 510-2 (e.g., the reflector 410 of FIG. 5, the reflector 510 of FIGS. 6 to 11, and/or the reflector 510-1 of FIG. 12) may include an incidence surface 511, an exit surface 512, a reflective surface 513, and a plurality of side surfaces 514. The reflector 510-2 may include a protrusion 515-2 (e.g., the protrusion 515 of FIG. 6 to 10 and/or the protrusion 515-1 of FIG. 12). The protrusion 515-2 may include a first surface 515A-2 (e.g., the first surface 515A of FIGS. 6 to 10), and three second surfaces 515B-2 (e.g., the second surface 515B of FIGS. 6 to 10). The protrusion 515-2 may include a solid with a substantially triangular cross section.

The reflector 510-2 may include a parting line P. The parting line P may include a first parting line P1, a second parting line P2, and a third parting line P3. The first parting line P1 may extend substantially parallel to the reflective surface 513. A portion P21 of the second parting line P2 may extend parallel to the incidence surface 511 and parallel to the exit surface 512. The other portion P22 of the second parting line P2 may be connected to the longest line of the lines connecting any two points on the outline of the protrusion 515-2 when the protrusion 515-2 is viewed in the side view (e.g., FIG. 14). The third parting line P3 may be the longest line of the lines connecting any two points (e.g., corners) on the outline of the first surface 515A-1.

The corrosion area C may be formed in an area between the parting line P and the reflective surface 513 on the at least one side surface 514. However, embodiments are not limited thereto, and the corrosion area C may be applied to all areas of the at least one side surface 514 and/or the second surface 515B-2 of the protrusion 515-2 excluding the first surface 515A-2 of the protrusion 515-2.

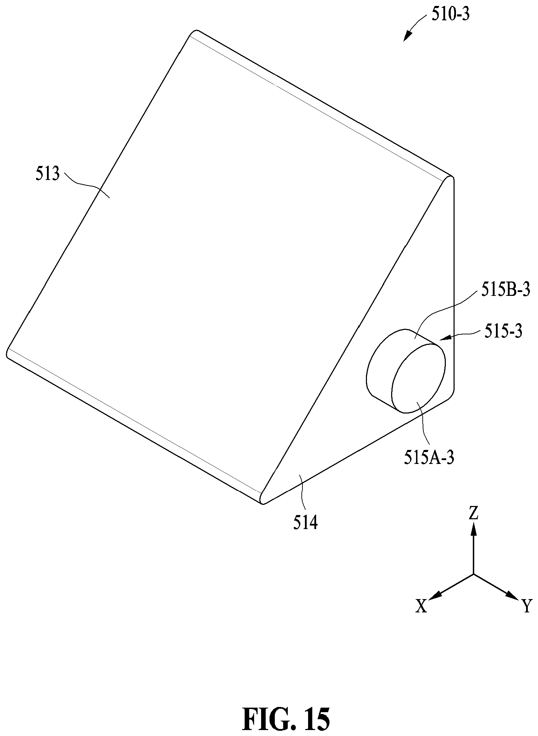

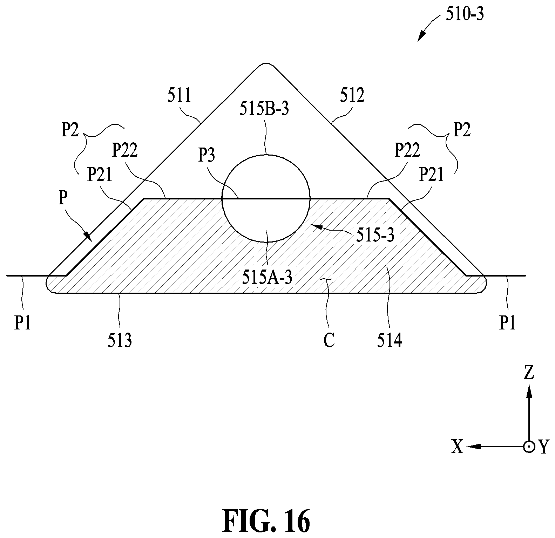

FIG. 15 is a perspective view of a reflector according to an embodiment. FIG. 16 is a side view of the reflector according to an embodiment. The coordinate systems shown in FIGS. 15 and 16 may be represented to conform to the coordinate systems shown in FIGS. 6 to 11.

Referring to FIGS. 15 and 16, a reflector 510-3 (e.g., the reflector 410 of FIG. 5, the reflector 510 of FIGS. 6 to 11, the reflector 510-1 of FIG. 12, and/or the reflector 510-2 of FIGS. 13 and 14) may include an incidence surface 511, an exit surface 512, a reflective surface 513, and a plurality of side surfaces 514. The reflector 510-3 may include a protrusion 515-3 (e.g., the protrusion 515 of FIG. 6 to 10, the protrusion 515-1 of FIG. 12, and/or the protrusion 515-2 of FIGS. 13 and 14). The protrusion 515-3 may include a first surface 515A-3 (e.g., the first surface 515A of FIGS. 6 to 10, and/or the first surface 515A-2 of FIGS. 13 and 14), and a second surface 515B-3 (e.g., the second surface 515B of FIGS. 6 to 10 and/or the second surface 515B-2 of FIGS. 13 and 14). The protrusion 515-3 may include a solid with a substantially circular or oval cross section.

The reflector 510-3 may include a parting line P. The parting line P may include a first parting line P1, a second parting line P2, and a third parting line P3. The first parting line P1 may extend substantially parallel to the reflective surface 513. A portion P21 of the second parting line P2 may extend parallel to the incidence surface 511 and parallel to the exit surface 512. The other portion P22 of the second parting line P2 may be connected to the longest line (e.g., the line with a diameter) of the lines connecting any two points on the outline of the protrusion 515-3 when the protrusion 515-3 is viewed in the side view (e.g., FIG. 16). The third parting line P3 may extend passing through the center of the first surface 515A-3. The length of the third parting line P3 may be substantially equal to the diameter (the length of the major or minor axis in the case of an oval) of the first surface 515A-3.

The corrosion area C may be formed in an area between the parting line P and the reflective surface 513 on the at least one side surface 514. However, embodiments are not limited thereto, and the corrosion area C may be applied to all areas of the at least one side surface 514 and/or the second surface 515B-3 of the protrusion 515-3 excluding the first surface 515A-3 of the protrusion 515-3.

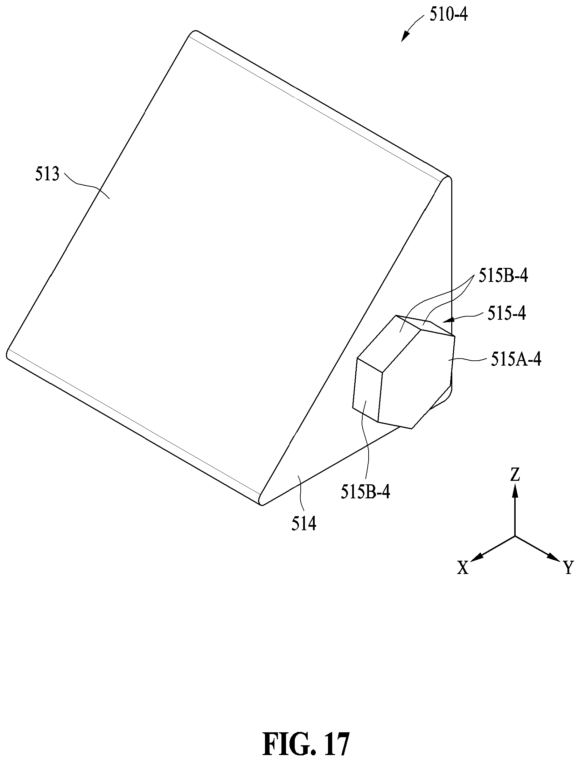

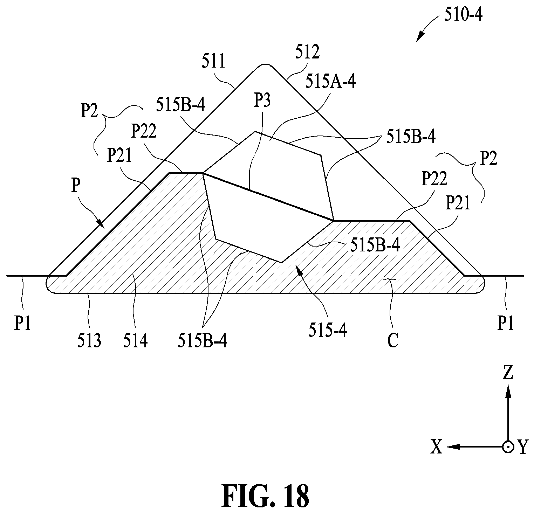

FIG. 17 is a perspective view of a reflector according to an embodiment. FIG. 18 is a side view of the reflector according to an embodiment. The coordinate systems shown in FIGS. 17 and 18 may be represented to conform to the coordinate systems shown in FIGS. 6 to 11.

Referring to FIGS. 17 and 18, a reflector 510-4 (e.g., the reflector 410 of FIG. 5, the reflector 510 of FIGS. 6 to 11, the reflector 510-1 of FIG. 12, the reflector 510-2 of FIGS. 13 and 14, and/or the reflector 510-3 of FIGS. 15 and 16) may include an incidence surface 511, an exit surface 512, a reflective surface 513, and a plurality of side surfaces 514. The reflector 510-4 may include a protrusion 515-4 (e.g., the protrusion 515 of FIG. 6 to 10, the protrusion 515-1 of FIG. 12, the protrusion 515-2 of FIGS. 13 and 14, and/or the protrusion 515-3 of FIGS. 15 and 16). The protrusion 515-4 may include a first surface 515A-4 (e.g., the first surface 515A of FIGS. 6 to 10, the first surface 515A-2 of FIGS. 13 and 14, and/or the first surface 515A-3 of FIGS. 15 and 16), and six second surfaces 515B-4 (e.g., the second surface 515B of FIGS. 6 to 10, the second surface 515B-2 of FIGS. 13 and 14, and/or the second surface 515B-3 of FIGS. 15 and 16). The protrusion 515-4 may include a solid with a substantially hexagonal cross section.

The reflector 510-4 may include a parting line P. The parting line P may include a first parting line P1, a second parting line P2, and a third parting line P3. The first parting line P1 may extend substantially parallel to the reflective surface 513. A portion P21 of the second parting line P2 may extend parallel to the incidence surface 511 and parallel to the exit surface 512. The other portion P22 of the second parting line P2 may be connected to the longest line of the lines connecting any two points on the outline of the protrusion 515-4 when the protrusion 515-4 is viewed in the side view (e.g., FIG. 18). The third parting line P3 may extend passing through the geometric center of the first surface 515A-4. The third parting line P3 may be the longest line of the lines connecting any two points (e.g., corners) of the first surface 515A-4.

The corrosion area C may be formed in an area between the parting line P and the reflective surface 513 on the at least one side surface 514. However, embodiments are not limited thereto, and the corrosion area C may be applied to all areas of the at least one side surface 514 and/or at least one second surface 515B-4 of the protrusion 515-4 excluding the first surface 515A-4 of the protrusion 515-4.

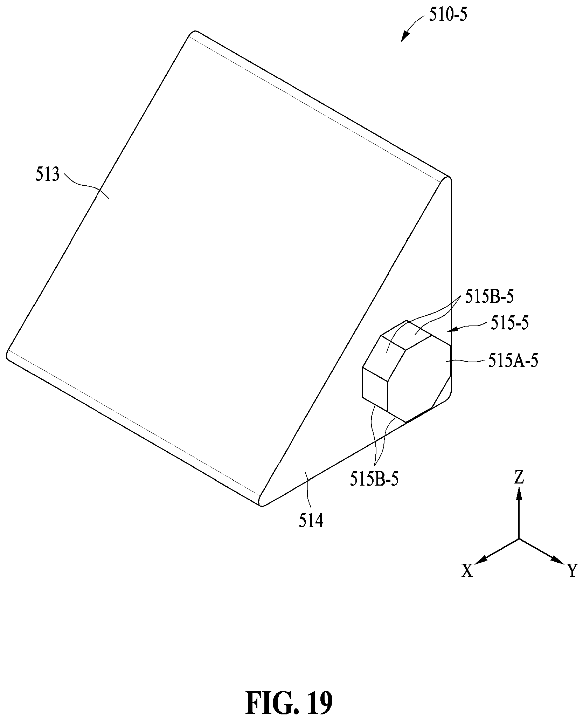

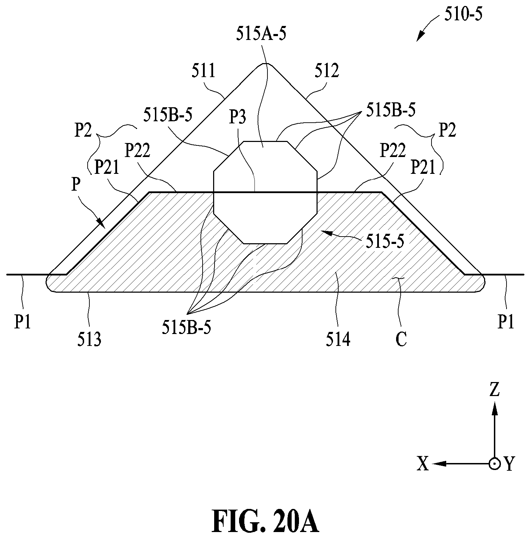

FIG. 19 is a perspective view of a reflector according to an embodiment. FIG. 20A is a side view of the reflector according to an embodiment. The coordinate systems shown in FIGS. 19 and 20A may be represented to conform to the coordinate systems shown in FIGS. 6 to 11.

Referring to FIGS. 19 and 20A, a reflector 510-5 (e.g., the reflector 410 of FIG. 5, the reflector 510 of FIGS. 6 to 11, the reflector 510-1 of FIG. 12, the reflector 510-2 of FIGS. 13 and 14, the reflector 510-3 of FIGS. 15 and 16, and/or the reflector 510-4 of FIGS. 17 and 18) may include an incidence surface 511, an exit surface 512, a reflective surface 513, and a plurality of side surfaces 514. The reflector 510-5 may include a protrusion 515-5 (e.g., the protrusion 515 of FIG. 6 to 10, the protrusion 515-1 of FIG. 12, the protrusion 515-2 of FIGS. 13 and 14, the protrusion 515-3 of FIGS. 15 and 16, and/or the protrusion 515-4 of FIGS. 17 and 18). The protrusion 515-5 may include a first surface 515A-5 (e.g., the first surface 515A of FIGS. 6 to 10, the first surface 515A-2 of FIGS. 13 and 14, the first surface 515A-3 of FIGS. 15 and 16, and/or the first surface 515A-4 of FIGS. 17 and 18), and eight second surfaces 515B-5 (e.g., the second surface 515B of FIGS. 6 to 10, the second surface 515B-2 of FIGS. 13 and 14, the second surface 515B-3 of FIGS. 15 and 16, and/or the second surfaces 515B-4 of FIGS. 17 and 18). The protrusion 515-5 may include a solid with a substantially octagonal cross section.

The reflector 510-5 may include a parting line P. The parting line P may include a first parting line P1, a second parting line P2, and a third parting line P3. The first parting line P1 may extend substantially parallel to the reflective surface 513. A portion P21 of the second parting line P2 may extend parallel to the incidence surface 511 and parallel to the exit surface 512. The other portion P22 of the second parting line P2 may be connected to the longest line of the lines connecting any two points on the outline of the protrusion 515-5 when the protrusion 515-5 is viewed in the side view (e.g., FIG. 20A). The third parting line P3 may extend passing through the geometric center of the first surface 515A-5. The third parting line P3 may be the longest line of the lines connecting any two edges of the first surface 515A-5.

The corrosion area C may be formed in an area between the parting line P and the reflective surface 513 on the at least one side surface 514. However, embodiments are not limited thereto, and the corrosion area C may be applied to all areas of the at least one side surface 514 and/or at least one second surface 515B-5 of the protrusion 515-5 excluding the first surface 515A-5 of the protrusion 515-5.

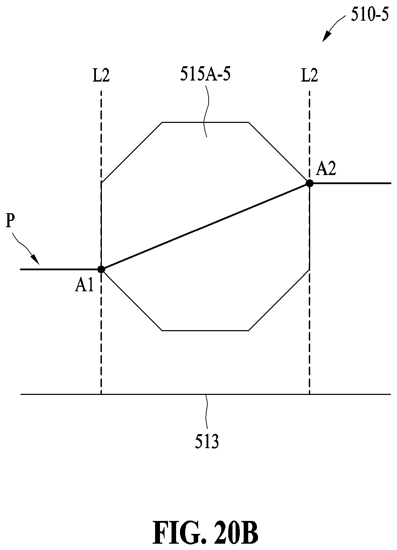

FIG. 20B is a side view illustrating a portion of a reflector according to an embodiment.

Referring to FIG. 20B, unlike the parting line P shown in FIG. 20A, if any two points A1 and A2 can be designated on the outline of the first surface 515A-5 and if virtual lines L1 and L2 do not meet the outline of the first surface 515A-5 excluding the edges of the outline of the first surface 515A-5 on which the two points A1 and A2 are positioned, respectively, when the virtual lines L1 and L2 are drawn from the two points A1 and A2 in a direction toward the reflective surface 513, then the two points A1 and A2 may be determined to be points that the parting line P passes through.

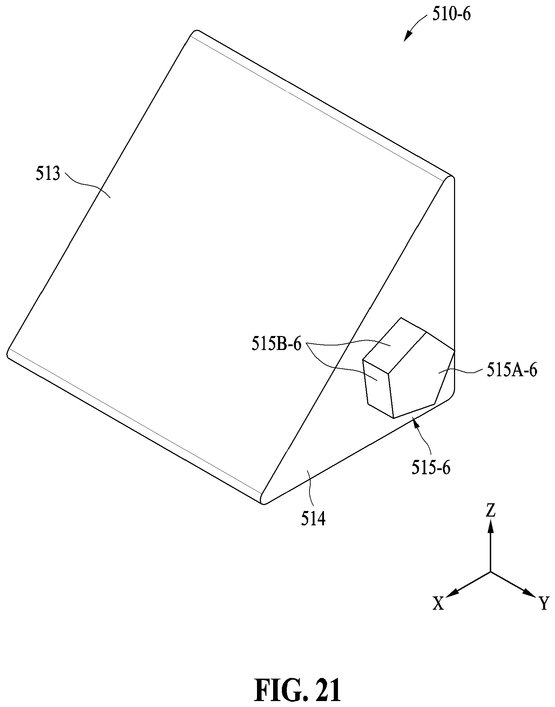

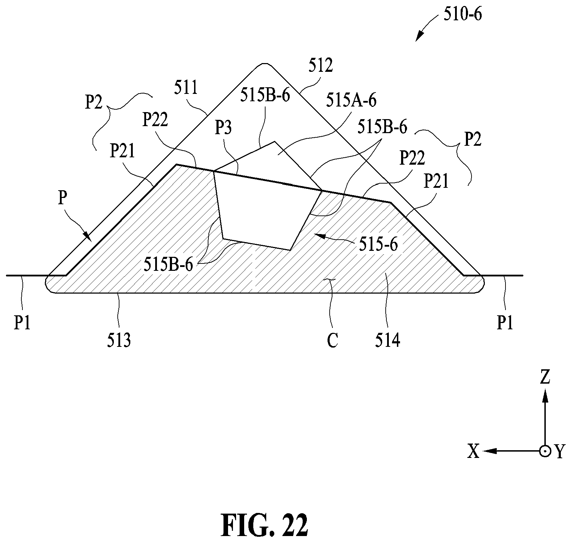

FIG. 21 is a perspective view of a reflector according to an embodiment. FIG. 22 is a side view of the reflector according to an embodiment. The coordinate systems shown in FIGS. 21 and 22 may be represented to conform to the coordinate systems shown in FIGS. 6 to 11.

Referring to FIGS. 21 and 22, a reflector 510-6 (e.g., the reflector 410 of FIG. 5, the reflector 510 of FIGS. 6 to 11, the reflector 510-1 of FIG. 12, the reflector 510-2 of FIGS. 13 and 14, the reflector 510-3 of FIGS. 15 and 16, the reflector 510-4 of FIGS. 17 and 18, and/or the reflector 510-5 of FIGS. 19, 20A, and 20B) may include an incidence surface 511, an exit surface 512, a reflective surface 513, and a plurality of side surfaces 514. The reflector 510-6 may include a protrusion 515-6 (e.g., the protrusion 515 of FIG. 6 to 10, the protrusion 515-1 of FIG. 12, the protrusion 515-2 of FIGS. 13 and 14, the protrusion 515-3 of FIGS. 15 and 16, the protrusion 515-4 of FIGS. 17 and 18, and/or the protrusion 515-5 of FIGS. 19, 20A, and 20B). The protrusion 515-6 may include a first surface 515A-6 (e.g., the first surface 515A of FIGS. 6 to 10, the first surface 515A-2 of FIGS. 13 and 14, the first surface 515A-3 of FIGS. 15 and 16, the first surface 515A-4 of FIGS. 17 and 18, and/or the first surface 515A-5 of FIGS. 19, 20A, and 20B), and five second surfaces 515B-6 (e.g., the second surface 515B of FIGS. 6 to 10, the second surface 515B-2 of FIGS. 13 and 14, the second surface 515B-3 of FIGS. 15 and 16, the second surfaces 515B-4 of FIGS. 17 and 18, and/or the second surfaces 515B-5 of FIGS. 19, 20A, and 20B). The protrusion 515-6 may include a solid with a substantially pentagonal cross section.

The reflector 510-6 may include a parting line P. The parting line P may include a first parting line P1, a second parting line P2, and a third parting line P3. The first parting line P1 may extend substantially parallel to the reflective surface 513. A portion P21 of the second parting line P2 may extend parallel to the incidence surface 511 and parallel to the exit surface 512. The other portion P22 of the second parting line P2 may be connected to the longest line of the lines connecting any two points (e.g., corners) on the outline of the protrusion 515-6 when the protrusion 515-6 is viewed in the side view (e.g., FIG. 22). The third parting line P3 may be the longest line of the lines connecting any two points (e.g., corners) on the outline of the first surface 515A-6.

The corrosion area C may be formed in an area between the parting line P and the reflective surface 513 on the at least one side surface 514. However, embodiments are not limited thereto, and the corrosion area C may be applied to all areas of the at least one side surface 514 and/or at least one second surface 515B-6 of the protrusion 515-6 excluding the first surface 515A-6 of the protrusion 515-6.

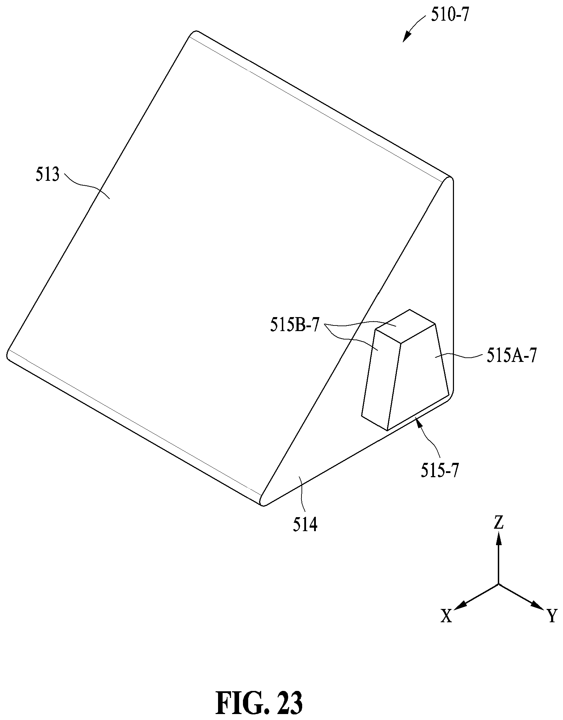

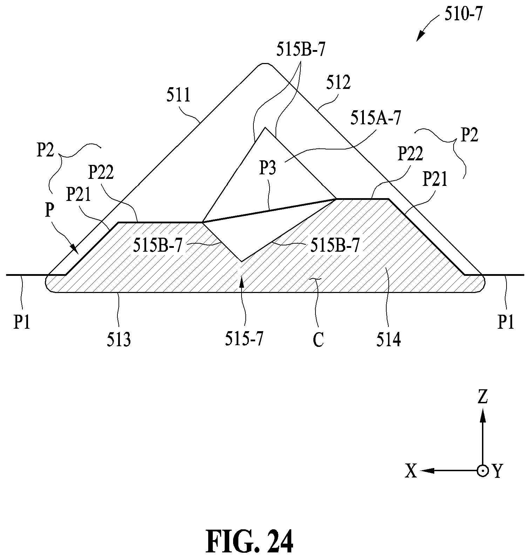

FIG. 23 is a perspective view of a reflector according to an embodiment. FIG. 24 is a side view of the reflector according to an embodiment. The coordinate systems shown in FIGS. 23 and 24 may be represented to conform to the coordinate systems shown in FIGS. 6 to 11.

Referring to FIGS. 23 and 24, a reflector 510-7 (e.g., the reflector 410 of FIG. 5, the reflector 510 of FIGS. 6 to 11, the reflector 510-1 of FIG. 12, the reflector 510-2 of FIGS. 13 and 14, the reflector 510-3 of FIGS. 15 and 16, the reflector 510-4 of FIGS. 17 and 18, the reflector 510-5 of FIGS. 19, 20A, and 20B, and/or the reflector 510-6 of FIGS. 21 and 22) may include an incidence surface 511, an exit surface 512, a reflective surface 513, and a plurality of side surfaces 514. The reflector 510-7 may include a protrusion 515-7 (e.g., the protrusion 515 of FIG. 6 to 10, the protrusion 515-1 of FIG. 12, the protrusion 515-2 of FIGS. 13 and 14, the protrusion 515-3 of FIGS. 15 and 16, the protrusion 515-4 of FIGS. 17 and 18, the protrusion 515-5 of FIGS. 19, 20A, and 20B, and/or the protrusion 515-6 of FIGS. 21 and 22). The protrusion 515-7 may include a first surface 515A-7 (e.g., the first surface 515A of FIGS. 6 to 10, the first surface 515A-2 of FIGS. 13 and 14, the first surface 515A-3 of FIGS. 15 and 16, the first surface 515A-4 of FIGS. 17 and 18, the first surface 515A-5 of FIGS. 19, 20A, and 20B, and/or the first surface 515A-6 of FIGS. 21 and 22), and four second surfaces 515B-7 (e.g., the second surface 515B of FIGS. 6 to 10, the second surface 515B-2 of FIGS. 13 and 14, the second surface 515B-3 of FIGS. 15 and 16, the second surfaces 515B-4 of FIGS. 17 and 18, the second surfaces 515B-5 of FIGS. 19, 20A, and 20B, and/or the second surfaces 515B-6 of FIGS. 21 and 22). The protrusion 515-7 may include a solid with a substantially trapezoidal cross section.

The reflector 510-7 may include a parting line P. The parting line P may include a first parting line P1, a second parting line P2, and a third parting line P3. The first parting line P1 may extend substantially parallel to the reflective surface 513. A portion P21 of the second parting line P2 may extend parallel to the incidence surface 511 and parallel to the exit surface 512. The other portion P22 of the second parting line P2 may be connected to the longest line of the lines connecting any two points on the outline of the protrusion 515-7 when the protrusion 515-7 is viewed in the side view (e.g., FIG. 24). The third parting line P3 may be the longest line of the lines connecting any two points (e.g., corners) on the outline of the first surface 515A-7.

The corrosion area C may be formed in an area between the parting line P and the reflective surface 513 on the at least one side surface 514. However, embodiments are not limited thereto, and the corrosion area C may be applied to all areas of the at least one side surface 514 and/or at least one second surface 515B-7 of the protrusion 515-7 excluding the first surface 515A-7 of the protrusion 515-7.

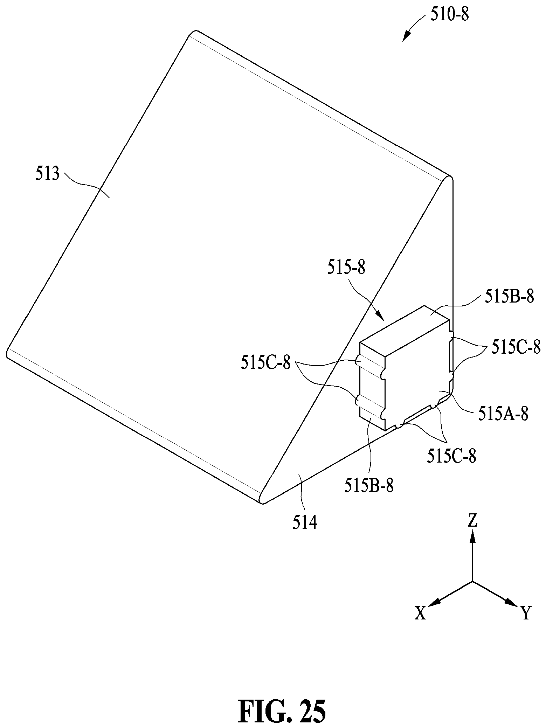

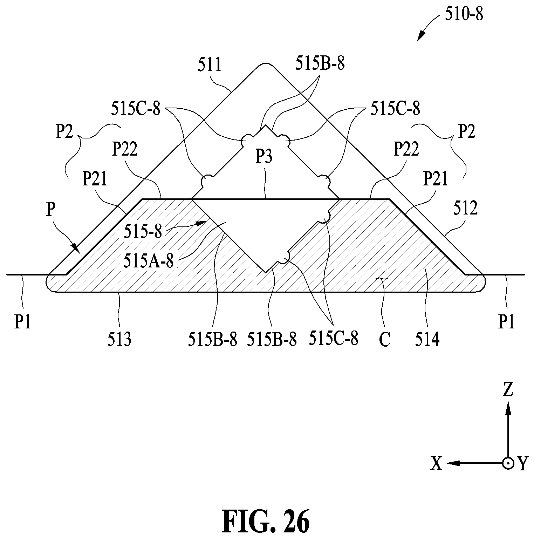

FIG. 25 is a perspective view of a reflector according to an embodiment. FIG. 26 is a side view of the reflector according to an embodiment. The coordinate systems shown in FIGS. 25 and 26 may be represented to conform to the coordinate systems shown in FIGS. 6 to 11.

Referring to FIGS. 25 and 26, a reflector 510-8 (e.g., the reflector 410 of FIG. 5, the reflector 510 of FIGS. 6 to 11, the reflector 510-1 of FIG. 12, the reflector 510-2 of FIGS. 13 and 14, the reflector 510-3 of FIGS. 15 and 16, the reflector 510-4 of FIGS. 17 and 18, the reflector 510-5 of FIGS. 19, 20A, and 20B, the reflector 510-6 of FIGS. 21 and 22, and/or the reflector 510-7 of FIGS. 23 and 24) may include an incidence surface 511, an exit surface 512, a reflective surface 513, and a plurality of side surfaces 514. The reflector 510-8 may include a protrusion 515-8 (e.g., the protrusion 515 of FIG. 6 to 10, the protrusion 515-1 of FIG. 12, the protrusion 515-2 of FIGS. 13 and 14, the protrusion 515-3 of FIGS. 15 and 16, the protrusion 515-4 of FIGS. 17 and 18, the protrusion 515-5 of FIGS. 19, 20A, and 20B, the protrusion 515-6 of FIGS. 21 and 22, and/or the protrusion 515-7 of FIGS. 23 and 24). The protrusion 515-8 may include a first surface 515A-8 (e.g., the first surface 515A of FIGS. 6 to 10, the first surface 515A-2 of FIGS. 13 and 14, the first surface 515A-3 of FIGS. 15 and 16, the first surface 515A-4 of FIGS. 17 and 18, the first surface 515A-5 of FIGS. 19, 20A, and 20B, the first surface 515A-6 of FIGS. 21 and 22, and/or the first surface 515A-7 of FIGS. 23 and 24), and four second surfaces 515B-8 (e.g., the second surface 515B of FIGS. 6 to 10, the second surface 515B-2 of FIGS. 13 and 14, the second surface 515B-3 of FIGS. 15 and 16, the second surfaces 515B-4 of FIGS. 17 and 18, the second surfaces 515B-5 of FIGS. 19, 20A, and 20B, the second surfaces 515B-6 of FIGS. 21 and 22, and/or the second surfaces 515B-7 of FIGS. 23 and 24). The protrusion 515-8 may include a solid having a substantially square cross section. The protrusion 515-8 may include a plurality of (e.g., six) columns 515C-8. A plurality of (e.g., two) columns 515C-8 may be spaced apart from each other on at least one (e.g., three) second surfaces 515B-8 along the second surfaces 515B-8.

The reflector 510-8 may include a parting line P. The parting line P may include a first parting line P1, a second parting line P2, and a third parting line P3. The first parting line P1 may extend substantially parallel to the reflective surface 513. A portion P21 of the second parting line P2 may extend parallel to the incidence surface 511 and parallel to the exit surface 512. The other portion P22 of the second parting line P2 may be connected to the longest line of the lines connecting any two points (e.g., corners) on the outline of the protrusion 515-8 when the protrusion 515-8 is viewed in the side view (e.g., FIG. 26). The third parting line P3 may be the longest line of the lines connecting any two points (e.g., corners) on the outline passing through the geometric center of the first surface 515A-8.

The corrosion area C may be formed in an area between the parting line P and the reflective surface 513 on the at least one side surface 514. However, embodiments are not limited thereto, and the corrosion area C may be applied to all areas of the at least one side surface 514 and/or at least one second surface 515B-8 of the protrusion 515-8 excluding the first surface 515A-8 of the protrusion 515-8.

FIG. 27 is a perspective view of a reflector according to an embodiment. FIG. 28 is a side view of the reflector according to an embodiment. The coordinate systems shown in FIGS. 27 and 28 may be represented to conform to the coordinate systems shown in FIGS. 6 to 11.

Referring to FIGS. 27 and 28, a reflector 510-9 (e.g., the reflector 410 of FIG. 5, the reflector 510 of FIGS. 6 to 11, the reflector 510-1 of FIG. 12, the reflector 510-2 of FIGS. 13 and 14, the reflector 510-3 of FIGS. 15 and 16, the reflector 510-4 of FIGS. 17 and 18, the reflector 510-5 of FIGS. 19, 20A, and 20B, the reflector 510-6 of FIGS. 21 and 22, the reflector 510-7 of FIGS. 23 and 24, and/or the reflector 510-8 of FIGS. 25 and 26) may be implemented as a rhomboidal solid.

The reflector 510-9 may include an incidence surface 511-9 (e.g., the incidence surface 511 of FIGS. 6 to 10 and FIGS. 12 to 26). Light may enter the reflector 510-9 through at least a partial area of the incidence surface 511-9.

The reflector 510-9 may include an exit surface 512-9 (e.g., the exit surface 512 of FIGS. 6 to 10 and FIGS. 12 to 26) positioned opposite the incidence surface 511-9. The exit surface 512-9 may be substantially parallel to the incidence surface 511-9. Light may exit the reflector 510-9 through at least a partial area of the exit surface 512-9.

The reflector 510-9 may include a first reflective surface 513A-9 (e.g., the reflective surface 513 of FIGS. 6 to 10 and FIGS. 12 to 26) positioned between the incidence surface 511-9 and the exit surface 512-9. The first reflective surface 513A-9 may reflect the light entering through the incidence surface 511-9 toward the exit surface 512-9.

The reflector 510-9 may include a second reflective surface 513B-9 (e.g., the reflective surface 513 of FIGS. 6 to 10 and FIGS. 12 to 26) positioned between the incidence surface 511-9 and the exit surface 512-9 and opposite the first reflective surface 513A-9. The second reflective surface 513B-9 may reflect the light reflected by the first reflective surface 513A-9 toward the exit surface 512-9.

The reflector 510-9 may include a plurality of side surfaces 514-9 (e.g., the side surfaces 514 of FIGS. 6 to 26). The plurality of side surfaces 514-9 may be positioned between the incidence surface 511-9 and the exit surface 512-9 and between the first reflective surface 513A-9 and the second reflective surface 513B-9. At least two side surfaces 514-9 among the plurality of side surfaces 514-9 may be positioned opposite each other.

The reflector 510-9 may include at least one protrusion 515-9 (e.g., the protrusion 515 of FIG. 6 to 10, the protrusion 515-1 of FIG. 12, the protrusion 515-2 of FIGS. 13 and 14, the protrusion 515-3 of FIGS. 15 and 16, the protrusion 515-4 of FIGS. 17 and 18, the protrusion 515-5 of FIGS. 19, 20A, and 20B, the protrusion 515-6 of FIGS. 21 and 22, the protrusion 515-7 of FIGS. 23 and 24, and/or the protrusion 515-8 of FIGS. 25 and 26). The protrusion 515-9 may be placed on at least one side surface 514-9.

The protrusion 515-9 may include a first surface 515A-9 (e.g., the first surface 515A of FIGS. 6 to 10, the first surface 515A-2 of FIGS. 13 and 14, the first surface 515A-3 of FIGS. 15 and 16, the first surface 515A-4 of FIGS. 17 and 18, the first surface 515A-5 of FIGS. 19, 20A, and 20B, the first surface 515A-6 of FIGS. 21 and 22, the first surface 515A-7 of FIGS. 23 and 24, and/or the first surface 515A-8 of FIGS. 25 and 26), and a plurality of (e.g., four) second surfaces 515B-9 (e.g., the second surface 515B of FIGS. 6 to 10, the second surface 515B-2 of FIGS. 13 and 14, the second surface 515B-3 of FIGS. 15 and 16, the second surfaces 515B-4 of FIGS. 17 and 18, the second surfaces 515B-5 of FIGS. 19, 20A, and 20B, the second surfaces 515B-6 of FIGS. 21 and 22, the second surfaces 515B-7 of FIGS. 23 and 24, and the second surfaces 515B-8 of FIGS. 25 and 26).

The protrusion 515-9 may include a gate area G. The gate area G may be positioned on the first surface 515A-9.

The reflector 510-9 may include a parting line P. The parting line P may include a first parting line P1, a second parting line P2, and a third parting line P3. A portion of the first parting line P1 may extend substantially parallel to an edge of the first reflective surface 513A-9 abutting at least one side surface 514-9 along the edge. A portion of the first parting line P1 may extend substantially parallel to an edge of the second reflective surface 513B-9 abutting at least one side surface 514-9 along the edge. The second parting line P2 may be connected to the first parting line P1 and extend toward the protrusion 515-9. For example, the second parting line P2 may extend to an edge between at least one second surface 515B-9 and the first surface 515A-9 toward the center of the gate area G positioned on the first surface 515A-9. The third parting line P3 may be connected to edges between at least one second surface 515B-9 and the first surface 515A-9. The third parting line P3 may be connected to the second parting line P2 and pass through the center of the gate area G.

The reflector 510-9 may include a corrosion area C. The corrosion area C may be positioned in any one area of the at least one side surface 514-9 based on the parting line P. For example, the corrosion area C may be defined by the first parting line P1, the second parting line P2, at least one edge where at least one second surface 515B-9 of the protrusion 515-9 and at least one side surface 514-9 meet, a portion of the edge of the incidence surface 511-9 abutting at least one side surface 514-9, an edge of the first reflective surface 513A-9 abutting at least one side surface 514-9, and a portion of the edge of the exit surface 512-9 abutting at least one side surface 514-9.

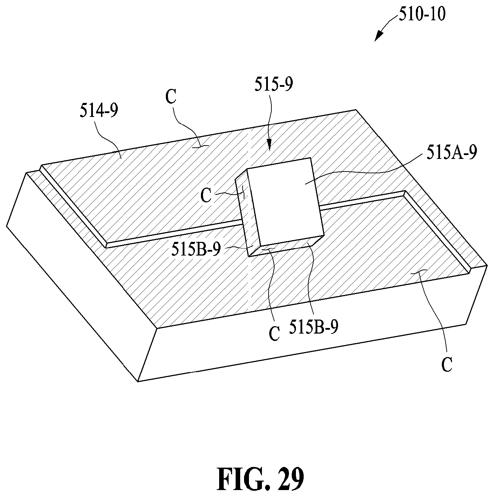

However, the corrosion area C is not limited to the shown embodiment, and may also be applied to another portion of the reflector 510-9 excluding the first surface 515A-9 of the protrusion 515-9 (e.g., all areas of the side surface 514-9). For example, as shown in FIG. 29, according to an embodiment, a reflector 515-10 (e.g., the reflector 515-9 of FIGS. 27 and 28) may include a corrosion area C formed in all areas of at least one side surface 514-9 and a second surface 515B-9 of a protrusion 515-9 excluding a first surface 515A-9 of the protrusion 515-9.

One aspect of the disclosure may provide a reflector for reducing or preventing phenomena (e.g., ghosting, flare, and/or glare) that may occur in a captured image due to unnecessary light reflection in a module. One aspect of the disclosure may provide a camera module for providing an image with improved quality. One aspect of the disclosure may provide an electronic device including the camera module.

A reflector 410; 510; 510-1; 510-2; 510-3; 510-4; 510-5; 510-6; 510-7; 510-8; 510-9; 510-10 may include an incidence surface 411; 511; 511-9 through which light enters, an exit surface 412; 512; 512-9 through which light exits, a reflective surface 413; 513; 513A-9, 513B-9 configured to reflect the light entering through the incidence surface 411; 511; 511-9 toward the exit surface 412; 512; 512-9, and a plurality of side surfaces 514; 514-9 connected to the incidence surface 411; 511; 511-9, the exit surface 412; 512; 512-9, and the reflective surface 413; 513; 513A-9, 513B-9. The reflector 410; 510; 510-1; 510-2; 510-3; 510-4; 510-5; 510-6; 510-7; 510-8; 510-9; 510-10 may include a protrusion 515; 515-1; 515-2; 515-3; 515-4; 515-5; 515-6; 515-7; 515-8; 515-9 protruding laterally from at least one side surface 514; 514-9 among the plurality of side surfaces 514; 514-9. The protrusion 515; 515-1; 515-2; 515-3; 515-4; 515-5; 515-6; 515-7; 515-8; 515-9 may include a first surface 515A; 515A-1; 515A-2; 515A-3; 515A-4; 515A-5; 515A-6; 515A-7; 515A-8; 515A-9, and a second surface 515B; 515B-1; 515B-2; 515B-3; 515B-4; 515B-5; 515B-6; 515B-7; 515B-8; 515B-9 connecting the first surface 515A; 515A-1; 515A-2; 515A-3; 515A-4; 515A-5; 515A-6; 515A-7; 515A-8; 515A-9 and the at least one side surface 514; 514-9. The reflector 410; 510; 510-1; 510-2; 510-3; 510-4; 510-5; 510-6; 510-7; 510-8; 510-9; 510-10 may include a gate area G on the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9. The reflector 410; 510; 510-1; 510-2; 510-3; 510-4; 510-5; 510-6; 510-7; 510-8; 510-9; 510-10 may include a corrosion area C that is on the at least one side surface 514; 514-9 and does not overlap the gate area G. The reflector 410; 510; 510-1; 510-2; 510-3; 510-4; 510-5; 510-6; 510-7; 510-8; 510-9; 510-10 may include a parting line P extending from the at least one side surface 514; 514-9 along at least part of an edge of the at least one side surface 514; 514-9 abutting the reflective surface 413; 513; 513A-9, 513B-9 and along the at least one side surface 514; 514-9, and passing through the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9.

The at least one side surface 514; 514-9 may be inclined with respect to the reflective surface 413; 513; 513A-9, 513B-9.

An angle of inclination of the at least one side surface 514; 514-9 with respect to the reflective surface 413; 513; 513A-9, 513B-9 may be substantially equal to or greater than about 2.5 degrees.

A length of an edge between the incidence surface 411; 511; 511-9 and the exit surface 412; 512; 512-9 may be less than a length of an edge between the incidence surface 411; 511; 511-9 and the reflective surface 413; 513; 513A-9, 513B-9 or a length of an edge between the exit surface 412; 512; 512-9 and the reflective surface 413; 513; 513A-9, 513B-9.

The parting line P may pass through a center of the gate area G.

On the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9 and between the parting line P and the reflective surface 413; 513; 513A-9, 513B-9, a first width according to the reflective surface 413; 513; 513A-9, 513B-9 at a first position at a first distance H1 from the reflective surface 413; 513; 513A-9, 513B-9 may be substantially equal to or greater than a second width according to the reflective surface 413; 513; 513A-9, 513B-9 at a second position at a second distance H2 from the reflective surface 413; 513; 513A-9, 513B-9, wherein the first distance H1 may be greater than the second distance H2.

The parting line P may bisect the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9.

The parting line P may pass through at least two corner areas of the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9.

The parting line P may pass through at least two edge areas of the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9.

The parting line P may extend along an edge area of the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9.

An area of the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9 may be substantially equal to or greater than about 25% of a sum of an area of the at least one side surface 514; 514-9 and an area of the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9.

A maximum distance between the at least one side surface 514; 514-9 and the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9 may be equal to or greater than about 0.3 mm.

The reflector 410; 510; 510-1; 510-2; 510-3; 510-4; 510-5; 510-6; 510-7; 510-8; 510-9; 510-10 may include a corrosion area on a second surface 515B; 515B-1; 515B-2; 515B-3; 515B-4; 515B-5; 515B-6; 515B-7; 515B-8; 515B-9 of the protrusion 515; 515-1; 515-2; 515-3; 515-4; 515-5; 515-6; 515-7; 515-8; 515-9.

The protrusion 515; 515-1; 515-2; 515-3; 515-4; 515-5; 515-6; 515-7; 515-8; 515-9 may be connected to the reflective surface 413; 513; 513A-9, 513B-9.

The protrusion 515; 515-1; 515-2; 515-3; 515-4; 515-5; 515-6; 515-7; 515-8; 515-9 may be spaced apart from the reflective surface 413; 513; 513A-9, 513B-9.

The reflector 410; 510; 510-1; 510-2; 510-3; 510-4; 510-5; 510-6; 510-7; 510-8; 510-9; 510-10 may include a reflection valid surface 516 on the reflective surface 413; 513; 513A-9, 513B-9.

An area of the reflection valid surface 516 may be less than an area of the reflective surface 413; 513; 513A-9, 513B-9.

The gate area G may include an injection gate G1 to inject a molding material into any one side surface 514; 514-9 among the plurality of side surfaces 514; 514-9, and a discharge gate G2 to discharge the injected molding material from another side surface 514; 514-9 among the plurality of side surfaces 514; 514-9.

A camera module 180; 280A, 280B, 280C; 400 may include a reflector 410; 510; 510-1; 510-2; 510-3; 510-4; 510-5; 510-6; 510-7; 510-8; 510-9; 510-10. The reflector 410; 510; 510-1; 510-2; 510-3; 510-4; 510-5; 510-6; 510-7; 510-8; 510-9; 510-10 may include an incidence surface 411; 511; 511-9 through which light enters, an exit surface 412; 512; 512-9 through which light exits, a reflective surface 413; 513; 513A-9, 513B-9 configured to reflect the light entering through the incidence surface 411; 511; 511-9 toward the exit surface 412; 512; 512-9, and a plurality of side surfaces 514; 514-9 connected to the incidence surface 411; 511; 511-9, the exit surface 412; 512; 512-9, and the reflective surface 413; 513; 513A-9, 513B-9. The reflector 410; 510; 510-1; 510-2; 510-3; 510-4; 510-5; 510-6; 510-7; 510-8; 510-9; 510-10 may include a protrusion 515; 515-1; 515-2; 515-3; 515-4; 515-5; 515-6; 515-7; 515-8; 515-9 protruding laterally from at least one side surface 514; 514-9 among the plurality of side surfaces 514; 514-9. The protrusion 515; 515-1; 515-2; 515-3; 515-4; 515-5; 515-6; 515-7; 515-8; 515-9 may include a first surface 515A; 515A-1; 515A-2; 515A-3; 515A-4; 515A-5; 515A-6; 515A-7; 515A-8; 515A-9, and a second surface 515B; 515B-1; 515B-2; 515B-3; 515B-4; 515B-5; 515B-6; 515B-7; 515B-8; 515B-9 connecting the first surface 515A; 515A-1; 515A-2; 515A-3; 515A-4; 515A-5; 515A-6; 515A-7; 515A-8; 515A-9 and the at least one side surface 514; 514-9. The reflector 410; 510; 510-1; 510-2; 510-3; 510-4; 510-5; 510-6; 510-7; 510-8; 510-9; 510-10 may include a gate area G on the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9. The reflector 410; 510; 510-1; 510-2; 510-3; 510-4; 510-5; 510-6; 510-7; 510-8; 510-9; 510-10 may include a corrosion area C that is on the at least one side surface 514; 514-9 and does not overlap the gate area G. The reflector 410; 510; 510-1; 510-2; 510-3; 510-4; 510-5; 510-6; 510-7; 510-8; 510-9; 510-10 may include a parting line P extending along at least part of an edge of the reflective surface 413; 513; 513A-9, 513B-9 and along the at least one side surface 514; 514-9, and passing through the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9.

An electronic device 101; 301 may include a camera module 180; 280A, 280B, 280C; 400. The camera module 180; 280A, 280B, 280C; 400 may include a reflector 410; 510; 510-1; 510-2; 510-3; 510-4; 510-5; 510-6; 510-7; 510-8; 510-9; 510-10. The reflector 410; 510; 510-1; 510-2; 510-3; 510-4; 510-5; 510-6; 510-7; 510-8; 510-9; 510-10 may include an incidence surface 411; 511; 511-9 through which light enters, an exit surface 412; 512; 512-9 through which light exits, a reflective surface 413; 513; 513A-9, 513B-9 configured to reflect the light entering through the incidence surface 411; 511; 511-9 toward the exit surface 412; 512; 512-9, and a plurality of side surfaces 514; 514-9 connected to the incidence surface 411; 511; 511-9, the exit surface 412; 512; 512-9, and the reflective surface 413; 513; 513A-9, 513B-9. The reflector 410; 510; 510-1; 510-2; 510-3; 510-4; 510-5; 510-6; 510-7; 510-8; 510-9; 510-10 may include a protrusion 515; 515-1; 515-2; 515-3; 515-4; 515-5; 515-6; 515-7; 515-8; 515-9 protruding laterally from at least one side surface 514; 514-9 among the plurality of side surfaces 514; 514-9. The protrusion 515; 515-1; 515-2; 515-3; 515-4; 515-5; 515-6; 515-7; 515-8; 515-9 may include a first surface 515A; 515A-1; 515A-2; 515A-3; 515A-4; 515A-5; 515A-6; 515A-7; 515A-8; 515A-9, and a second surface 515B; 515B-1; 515B-2; 515B-3; 515B-4; 515B-5; 515B-6; 515B-7; 515B-8; 515B-9 connecting the first surface 515A; 515A-1; 515A-2; 515A-3; 515A-4; 515A-5; 515A-6; 515A-7; 515A-8; 515A-9 and the at least one side surface 514; 514-9. The reflector 410; 510; 510-1; 510-2; 510-3; 510-4; 510-5; 510-6; 510-7; 510-8; 510-9; 510-10 may include a gate area G on the first surface 515A; 515A-1; 515A-2; 515A-3; 515A-4; 515A-5; 515A-6; 515A-7; 515A-8; 515A-9 of the protrusion 515; 515-1; 515-2; 515-3; 515-4; 515-5; 515-6; 515-7; 515-8; 515-9. The reflector 410; 510; 510-1; 510-2; 510-3; 510-4; 510-5; 510-6; 510-7; 510-8; 510-9; 510-10 may include a corrosion area C that is on the at least one side surface 514; 514-9 and does not overlap the gate area G. The reflector 410; 510; 510-1; 510-2; 510-3; 510-4; 510-5; 510-6; 510-7; 510-8; 510-9; 510-10 may include a parting line P extending along at least part of an edge of the reflective surface 413; 513; 513A-9, 513B-9 and along the at least one side surface 514; 514-9, and passing through the first surface 515A; 515A-1; 515A-2; 515A-3; 515A-4; 515A-5; 515A-6; 515A-7; 515A-8; 515A-9; 510-10 of the protrusion 515; 515-1; 515-2; 515-3; 515-4; 515-5; 515-6; 515-7; 515-8; 515-9.

According to an embodiment, it is possible to suppress unnecessary light reflection inside a module.

The effects of the reflector, the camera module including the reflector, and the electronic device including the camera module according to embodiments may not be limited to the above-mentioned effects, and other unmentioned effects may be clearly understood from the following description by one of ordinary skill in the art.

The embodiments of the present disclosure are intended to be illustrative and not restrictive. Various modifications may be made to the detailed description of the disclosure including the accompanying scope of equivalents. Any of the embodiment(s) described herein may be used in combination with any of the other embodiment(s) described herein. It will be appreciated that all of the above-described embodiments, and their technical features, may be combined with one another in each and every combination, as defined in the appended claims.

## Claims

1. A reflector (410; 510; 510-1; 510-2; 510-3; 510-4; 510-5; 510-6; 510-7; 510-8; 510-9; 510-10) comprising:
an incidence surface (411; 511; 511-9) through which light enters;
an exit surface (412; 512; 512-9) through which light exits;
a reflective surface (413; 513; 513A-9, 513B-9) configured to reflect the light entering through the incidence surface (411; 511; 511-9) toward the exit surface (412; 512; 512-9);
a plurality of side surfaces (514; 514-9) connected to the incidence surface (411; 511-9), the exit surface (412; 512-9), and the reflective surface (413; 513; 513A-9, 513B-9);
a protrusion (515; 515-1; 515-2; 515-3; 515-4; 515-5; 515-6; 515-7; 515-8; 515-9) protruding laterally from at least one side surface (514; 514-9) among the plurality of side surfaces (514; 514-9), the protrusion (515; 515-1; 515-2; 515-3; 515-4; 515-5; 515-6; 515-7; 515-8; 515-9) comprising a first surface (515A; 515A-1; 515A-2; 515A-3; 515A-4; 515A-5; 515A-6; 515A-7; 515A-8; 515A-9), and a second surface (515B; 515B-1; 515B-2; 515B-3; 515B-4; 515B-5; 515B-6; 515B-7; 515B-8; 515B-9) connecting the first surface (515A; 515A-1; 515A-2; 515A-3; 515A-4; 515A-5; 515A-6; 515A-7; 515A-8; 515A-9) and the at least one side surface (514; 514-9);
a gate area (G) on the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9);
a corrosion area (C) disposed on on the at least one side surface (514; 514-9), wherein the corrosion area (C) does not overlap the gate area (G); and
a parting line (P) extending from the at least one side surface (514; 514-9) along at least part of an edge of the at least one side surface (514; 514-9) abutting the reflective surface (413; 513; 513A-9, 513B-9) and along the at least one side surface (514; 514-9), and passing through the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9).

2. The reflector of claim 1, wherein the at least one side surface (514; 514-9) is inclined with respect to the reflective surface (413; 513; 513A-9, 513B-9),
preferably, wherein an angle of inclination of the at least one side surface (514; 514-9) with respect to the reflective surface (413; 513; 513A-9, 513B-9) is substantially equal to or greater than 2.5 degrees.

3. The reflector of claim 1 or 2, wherein a length of an edge between the incidence surface (411; 511; 511-9) and the exit surface (412; 512; 512-9) is less than a length of an edge between the incidence surface (411; 511; 511-9) and the reflective surface (413; 513; 513A-9, 513B-9) or a length of an edge between the exit surface (412; 512; 512-9) and the reflective surface (413; 513; 513A-9, 513B-9).

4. The reflector of any one of claims 1 to 3, wherein the parting line (P) passes through a center of the gate area (G).

5. The reflector of any one of claims 1 to 4, wherein on the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9) and between the parting line (P) and the reflective surface (413; 513; 513A-9, 513B-9), a first width according to the reflective surface (413; 513; 513A-9, 513B-9) at a first position at a first distance (H1) from the reflective surface (413; 513; 513A-9, 513B-9) is substantially equal to or greater than a second width according to the reflective surface (413; 513; 513A-9, 513B-9) at a second position at a second distance (H2) from the reflective surface (413; 513; 513A-9, 513B-9), wherein the first distance (H1) is greater than the second distance (H2).

6. The reflector of any one of claims 1 to 5, wherein the parting line (P) bisects the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9), and/or
wherein the parting line (P) passes through at least two corner areas of the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9), and/or
wherein the parting line (P) passes through at least two edge areas of the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9), and/or
wherein the parting line P extends along an edge area of the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9).

7. The reflector of any one of claims 1 to 6, wherein an area of the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9) is substantially equal to or greater than 25% of a sum of an area of the at least one side surface (514; 514-9) and an area of the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9).

8. The reflector of any one of claims 1 to 7, wherein a maximum distance between the at least one side surface (514; 514-9) and the first surface (515A; 515A-1; 515A-2; 515A-3; 515A-4; 515A-5; 515A-6; 515A-7; 515A-8; 515A-9) of the protrusion (515; 515-1; 515-2; 515-3; 515-4; 515-5; 515-6; 515-7; 515-8; 515-9) is equal to or greater than 0.3 mm.

9. The reflector of any one of claims 1 to 8, further comprising:
an additional corrosion area on a second surface (515B; 515B-1; 515B-2; 515B-3; 515B-4; 515B-5; 515B-6; 515B-7; 515B-8; 515B-9) of the protrusion (515; 515-1; 515-2; 515-3; 515-4; 515-5; 515-6; 515-7; 515-8; 515-9).

10. The reflector of any one of claims 1 to 9, wherein the protrusion (515; 515-1; 515-2; 515-3; 515-4; 515-5; 515-6; 515-7; 515-8; 515-9) is connected to the reflective surface (413; 513; 513A-9, 513B-9).

11. The reflector of any one of claims 1 to 10, wherein the protrusion (515; 515-1; 515-2; 515-3; 515-4; 515-5; 515-6; 515-7; 515-8; 515-9) is spaced apart from the reflective surface (413; 513; 513A-9, 513B-9).

12. The reflector of any one of claims 1 to 11, further comprising:
a reflection valid surface (516) on the reflective surface (413; 513; 513A-9, 513B-9),
preferably, wherein an area of the reflection valid surface (516) is less than an area of the reflective surface (413; 513; 513A-9, 513B-9).

13. The reflector of any one of claims 1 to 12, wherein the gate area (G) comprises:
an injection gate (G1) for injecting a molding material into any one side surface (514; 514-9) among the plurality of side surfaces (514; 514-9); and
a discharge gate (G2) for discharging the injected molding material from another side surface (514; 514-9) among the plurality of side surfaces (514; 514-9).

14. A camera module (180; 280A, 280B, 280C; 400) comprising the reflector (410; 510; 510-1; 510-2; 510-3; 510-4; 510-5; 510-6; 510-7; 510-8; 510-9; 510-10) of any one of claims 1 to 13.

15. An electronic device (101; 301) comprising the camera module (180; 280A, 280B, 280C; 400) of claim 14.

## Patentansprüche

1. Reflektor (410; 510; 510-1; 510-2; 510-3; 510-4; 510-5; 510-6; 510-7; 510-8; 510-9; 510-10), umfassend:
eine Einfallsoberfläche (411; 511; 511-9), durch die Licht eintritt;
eine Austrittsoberfläche (412; 512; 512-9), durch die Licht austritt;
eine reflektierende Oberfläche (413; 513; 513A-9, 513B-9), die dazu konfiguriert ist, das Licht, das durch die Einfallsoberfläche (411; 511; 511-9) eintritt, zu der Austrittsoberfläche (412; 512; 512-9) zu reflektieren;
eine Vielzahl von Seitenoberflächen (514; 514-9), die mit der Einfallsoberfläche (411; 511-9), der Austrittsoberfläche (412; 512-9) und der reflektierenden Oberfläche (413; 513; 513A-9, 513B-9) verbunden ist;
einen Vorsprung (515; 515-1; 515-2; 515-3; 515-4; 515-5; 515-6; 515-7; 515-8; 515-9), der lateral von zumindest einer Seitenoberfläche (514; 514-9) unter der Vielzahl von Seitenoberflächen (514; 514-9) vorspringt, wobei der Vorsprung (515; 515-1; 515-2; 515-3; 515-4; 515-5; 515-6; 515-7; 515-8; 515-9) eine erste Oberfläche (515A; 515A-1; 515A-2; 515A-3; 515A-4; 515A-5; 515A-6; 515A-7; 515A-8; 515A-9) und eine zweite Oberfläche (515B; 515B-1; 515B-2; 515B-3; 515B-4; 515B-5; 515B-6; 515B-7; 515B-8; 515B-9), welche die erste Oberfläche (515A; 515A-1; 515A-2; 515A-3; 515A-4; 515A-5; 515A-6; 515A-7; 515A-8; 515A-9) und die zumindest eine Seitenoberfläche (514; 514-9) verbindet, umfasst;
einen Gatterbereich (G) auf der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9);
einen Korrosionsbereich (C), der auf der zumindest einen Seitenoberfläche (514; 514-9) angeordnet ist, wobei der Korrosionsbereich (C) den Gatterbereich (G) nicht überlappt; und
eine Trennlinie (P), die sich von der zumindest einen Seitenoberfläche (514; 514-9) entlang zumindest Teil einer Kante der zumindest einen Seitenoberfläche (514; 514-9), die an der reflektierenden Oberfläche (413; 513; 513A-9, 513B-9) anliegt, und entlang der zumindest einen Seitenoberfläche (514; 514-9) erstreckt und durch die erste Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) verläuft.

2. Reflektor nach Anspruch 1, wobei die zumindest eine Seitenoberfläche (514; 514-9) in Bezug auf die reflektierende Oberfläche (413; 513; 513A-9, 513B-9) geneigt ist,
wobei bevorzugt ein Neigungswinkel der zumindest einen Seitenoberfläche (514; 514-9) in Bezug auf die reflektierende Oberfläche (413; 513; 513A-9, 513B-9) im Wesentlichen gleich oder größer als 2,5 Grad ist.

3. Reflektor nach Anspruch 1 oder 2, wobei eine Länge einer Kante zwischen der Einfallsoberfläche (411; 511; 511-9) und der Austrittsoberfläche (412; 512; 512-9) weniger als eine Länge einer Kante zwischen der Einfallsoberfläche (411; 511; 511-9) und der reflektierenden Oberfläche (413; 513; 513A-9, 513B-9) oder eine Länge einer Kante zwischen der Austrittsoberfläche (412; 512; 512-9) und der reflektierenden Oberfläche (413; 513; 513A-9, 513B-9) ist.

4. Reflektor nach einem der Ansprüche 1 bis 3, wobei die Trennlinie (P) durch eine Mitte des Gatterbereichs (G) verläuft.

5. Reflektor nach einem der Ansprüche 1 bis 4, wobei auf der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) und zwischen der Trennlinie (P) und der reflektierenden Oberfläche (413; 513; 513A-9, 513B-9) eine erste Breite gemäß der reflektierenden Oberfläche (413; 513; 513A-9, 513B-9) an einer ersten Position in einem ersten Abstand (H1) von der reflektierenden Oberfläche (413; 513; 513A-9, 513B-9) im Wesentlichen gleich einer oder größer als eine zweite Breite gemäß der reflektierenden Oberfläche (413; 513; 513A-9, 513B-9) an einer zweiten Position in einem zweiten Abstand (H2) von der reflektierenden Oberfläche (413; 513; 513A-9, 513B-9) ist, wobei der erste Abstand (H1) größer als der zweite Abstand (H2) ist.

6. Reflektor nach einem der Ansprüche 1 bis 5, wobei die Trennlinie (P) die erste Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) halbiert, und/oder
wobei die Trennlinie (P) durch zumindest zwei Eckbereiche der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) verläuft, und/oder
wobei die Trennlinie (P) durch zumindest zwei Kantenbereiche der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) verläuft, und/oder
wobei sich die Trennlinie P entlang eines Kantenbereichs der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) erstreckt.

7. Reflektor nach einem der Ansprüche 1 bis 6, wobei ein Bereich der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) im Wesentlichen gleich oder größer als 25 % einer Summe eines Bereichs der zumindest einen Seitenoberfläche (514; 514-9) und eines Bereichs der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) ist.

8. Reflektor nach einem der Ansprüche 1 bis 7, wobei ein maximaler Abstand zwischen der zumindest einen Seitenoberfläche (514; 514-9) und der ersten Oberfläche (515A; 515A-1; 515A-2; 515A-3; 515A-4; 515A-5; 515A-6; 515A-7; 515A-8; 515A-9) des Vorsprungs (515; 515-1; 515-2; 515-3; 515-4; 515-5; 515-6; 515-7; 515-8; 515-9) gleich oder größer als 0,3 mm ist.

9. Reflektor nach einem der Ansprüche 1 bis 8, ferner umfassend:
einen zusätzlichen Korrosionsbereich auf einer zweiten Oberfläche (515B; 515B-1; 515B-2; 515B-3; 515B-4; 515B-5; 515B-6; 515B-7; 515B-8; 515B-9) des Vorsprungs (515; 515-1; 515-2; 515-3; 515-4; 515-5; 515-6; 515-7; 515-8; 515-9).

10. Reflektor nach einem der Ansprüche 1 bis 9, wobei der Vorsprung (515; 515-1; 515-2; 515-3; 515-4; 515-5; 515-6; 515-7; 515-8; 515-9) mit der reflektierenden Oberfläche (413; 513; 513A-9, 513B-9) verbunden ist.

11. Reflektor nach einem der Ansprüche 1 bis 10, wobei der Vorsprung (515; 515-1; 515-2; 515-3; 515-4; 515-5; 515-6; 515-7; 515-8; 515-9) von der reflektierenden Oberfläche (413; 513; 513A-9, 513B-9) beabstandet ist.

12. Reflektor nach einem der Ansprüche 1 bis 11, ferner umfassend:
eine reflexionsfähige Oberfläche (516) auf der reflektierenden Oberfläche (413; 513; 513A-9, 513B-9),
wobei bevorzugt ein Bereich der reflexionsfähigen Oberfläche (516) weniger als ein Bereich der reflektierenden Oberfläche (413; 513; 513A-9, 513B-9) ist.

13. Reflektor nach einem der Ansprüche 1 bis 12, wobei der Gatterbereich (G) Folgendes umfasst:
ein Einspritzgatter (G1) zum Einspritzen eines Formmaterials in eine beliebige Seitenoberfläche (514; 514-9) unter der Vielzahl von Seitenoberflächen (514; 514-9); und
ein Entladungsgatter (G2) zum Entladen des eingespritzten Formmaterials von einer anderen Seitenoberfläche (514; 514-9) unter der Vielzahl von Seitenoberflächen (514; 514-9).

14. Kameramodul (180; 280A, 280B, 280C; 400), umfassend den Reflektor (410; 510; 510-1; 510-2; 510-3; 510-4; 510-5; 510-6; 510-7; 510-8; 510-9; 510-10) nach einem der Ansprüche 1 bis 13.

15. Elektronische Vorrichtung (101; 301), umfassend das Kameramodul (180; 280A, 280B, 280C; 400) nach Anspruch 14.

## Revendications

1. Réflecteur (410 ; 510 ; 510-1 ; 510-2 ; 510-3 ; 510-4 ; 510-5 ; 510-6 ; 510-7 ; 510-8 ; 510-9 ; 510-10) comprenant :
une surface d'incidence (411 ; 511 ; 511-9) à travers laquelle la lumière entre ;
une surface de sortie (412 ; 512 ; 512-9) à travers laquelle la lumière sort ;
une surface réfléchissante (413 ; 513 ; 513A-9, 513B-9) conçue pour réfléchir la lumière entrant à travers la surface d'incidence (411 ; 511 ; 511-9) vers la surface de sortie (412 ; 512 ; 512-9) ;
une pluralité de surfaces latérales (514 ; 514-9) reliées à la surface d'incidence (411 ; 511-9), à la surface de sortie (412 ; 512-9) et à la surface réfléchissante (413 ; 513 ; 513A-9, 513B-9) ;
une saillie (515 ; 515-1 ; 515-2 ; 515-3 ; 515-4 ; 515-5 ; 515-6 ; 515-7 ; 515-8 ; 515-9) faisant saillie latéralement à partir d'au moins une surface latérale (514 ; 514-9) parmi la pluralité de surfaces latérales (514 ; 514-9), la saillie (515 ; 515-1 ; 515-2 ; 515-3 ; 515-4 ; 515-5 ; 515-6 ; 515-7 ; 515-8 ; 515-9) comprenant une première surface (515A ; 515A-1 ; 515A-2 ; 515A-3 ; 515A-4 ; 515A-5 ; 515A-6 ; 515A-7 ; 515A-8 ; 515A-9), et une seconde surface (515B ; 515B-1 ; 515B-2 ; 515B-3 ; 515B-4 ; 515B-5 ; 515B-6 ; 515B-7 ; 515B-8 ; 515B-9) reliant la première surface (515A ; 515A-1 ; 515A-2 ; 515A-3 ; 515A-4 ; 515A-5 ; 515A-6 ; 515A-7 ; 515A-8 ; 515A-9) et la au moins une surface latérale (514 ; 514-9) ;
une zone d'entrée (G) sur la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9) ;
une zone de corrosion (C) disposée sur l'au moins une surface latérale (514 ; 514-9), ladite zone de corrosion (C) ne chevauchant pas la zone d'entrée (G) ; et
une ligne de séparation (P) s'étendant à partir de l'au moins une surface latérale (514 ; 514-9) le long d'au moins une partie d'un bord de l'au moins une surface latérale (514 ; 514-9) en butée contre la surface réfléchissante (413 ; 513 ; 513A-9, 513B-9) et le long de l'au moins une surface latérale (514 ; 514-9), et passant à travers la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9).

2. Réflecteur de la revendication 1, ladite au moins une surface latérale (514 ; 514-9) étant inclinée par rapport à la surface réfléchissante (413 ; 513 ; 513A-9, 513B-9),
de préférence, un angle d'inclinaison de l'au moins une surface latérale (514 ; 514-9) par rapport à la surface réfléchissante (413 ; 513 ; 513A-9, 513B-9) étant sensiblement supérieur ou égal à 2,5 degrés.

3. Réflecteur de la revendication 1 ou 2, une longueur d'un bord entre la surface d'incidence (411 ; 511 ; 511-9) et la surface de sortie (412 ; 512 ; 512-9) étant inférieure à une longueur d'un bord entre la surface d'incidence (411 ; 511 ; 511-9) et la surface réfléchissante (413 ; 513 ; 513A-9, 513B-9) ou à une longueur d'un bord entre la surface de sortie (412 ; 512 ; 512-9) et la surface réfléchissante (413 ; 513 ; 513A-9, 513B-9).

4. Réflecteur de l'une quelconque des revendications 1 à 3, ladite ligne de séparation (P) passant à travers un centre de la zone d'entrée (G).

5. Réflecteur de l'une quelconque des revendications 1 à 4, sur la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9) et entre la ligne de séparation (P) et la surface réfléchissante (413 ; 513 ; 513A-9, 513B-9), une première largeur selon la surface réfléchissante (413 ; 513 ; 513A-9, 513B-9) au niveau d'une première position à une première distance (H1) de la surface réfléchissante (413 ; 513 ; 513A-9, 513B-9) étant sensiblement supérieure ou égale à une seconde largeur selon la surface réfléchissante (413 ; 513 ; 513A-9, 513B-9) au niveau d'une seconde position à une seconde distance (H2) de la surface réfléchissante (413 ; 513 ; 513A-9, 513B-9), ladite première distance (H1) étant supérieure à la seconde distance (H2).

6. Réflecteur de l'une quelconque des revendications 1 à 5, ladite ligne de séparation (P) coupant en deux la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9), et/ou
ladite ligne de séparation (P) passant à travers au moins deux zones de coin de la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9), et/ou
ladite ligne de séparation (P) passant à travers au moins deux zones de bord de la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9), et/ou
ladite ligne de séparation P s'étendant le long d'une zone de bord de la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9).

7. Réflecteur de l'une quelconque des revendications 1 à 6, une zone de la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9) étant sensiblement supérieure ou égale à 25 % d'une somme d'une zone de l'au moins une surface latérale (514 ; 514-9) et d'une zone de la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9).

8. Réflecteur de l'une quelconque des revendications 1 à 7, une distance maximale entre ladite au moins une surface latérale (514 ; 514-9) et la première surface (515A ; 515A-1 ; 515A-2 ; 515A-3 ; 515A-4 ; 515A-5 ; 515A-6 ; 515A-7 ; 515A-8 ; 515A-9) de la saillie (515 ; 515-1 ; 515-2 ; 515-3 ; 515-4 ; 515-5 ; 515-6 ; 515-7 ; 515-8 ; 515-9) étant supérieure ou égale à 0,3 mm.

9. Réflecteur de l'une quelconque des revendications 1 à 8, comprenant en outre :
une zone de corrosion supplémentaire sur une seconde surface (515B ; 515B-1 ; 515B-2 ; 515B-3 ; 515B-4 ; 515B-5 ; 515B-6 ; 515B-7 ; 515B-8 ; 515B-9) de la saillie (515 ; 515-1 ; 515-2 ; 515-3 ; 515-4 ; 515-5 ; 515-6 ; 515-7 ; 515-8 ; 515-9).

10. Réflecteur de l'une quelconque des revendications 1 à 9, ladite saillie (515 ; 515-1 ; 515-2 ; 515-3 ; 515-4 ; 515-5 ; 515-6 ; 515-7 ; 515-8 ; 515-9) étant reliée à la surface réfléchissante (413 ; 513 ; 513A-9, 513B-9).

11. Réflecteur de l'une quelconque des revendications 1 à 10, ladite saillie (515 ; 515-1 ; 515-2 ; 515-3 ; 515-4 ; 515-5 ; 515-6 ; 515-7 ; 515-8 ; 515-9) étant espacée de la surface réfléchissante (413 ; 513 ; 513A-9, 513B-9).

12. Réflecteur de l'une quelconque des revendications 1 à 11, comprenant en outre :
une surface valide de réflexion (516) sur la surface réfléchissante (413 ; 513 ; 513A-9, 513B-9), de préférence, une zone de la surface valide de réflexion (516) étant inférieure à une zone de la surface réfléchissante (413 ; 513 ; 513A-9, 513B-9).

13. Réflecteur de l'une quelconque des revendications 1 à 12, ladite zone d'entrée (G) comprenant :
une entrée d'injection (G1) destinée à l'injection d'un matériau de moulage dans une quelconque surface latérale (514 ; 514-9) parmi la pluralité de surfaces latérales (514 ; 514-9) ; et
une entrée de décharge (G2) destinée à la décharge du matériau de moulage injecté d'une autre surface latérale (514 ; 514-9) parmi la pluralité de surfaces latérales (514 ; 514-9).

14. Module de caméra (180 ; 280A, 280B, 280C ; 400) comprenant le réflecteur (410 ; 510 ; 510-1 ; 510-2 ; 510-3 ; 510-4 ; 510-5 ; 510-6 ; 510-7 ; 510-8 ; 510-9 ; 510-10) de l'une quelconque des revendications 1 à 13.

15. Dispositif électronique (101 ; 301) comprenant le module de caméra (180 ; 280A, 280B, 280C ; 400) de la revendication 14.
